(19) Europäisches Patentamt

European Patent Office

Office européen des brevets

(11) **EP 4 782 292 A1**

(12) **EUROPEAN PATENT APPLICATION**

(43) Date of publication:
**29.07.2026 Bulletin 2026/31**

(21) Application number: **25221056.2**

(22) Date of filing: **05.12.2025**

(51) International Patent Classification (IPC):
**B60W 30/09** (2012.01)  **B60W 60/00** (2020.01)
**B60W 30/095** (2012.01)  **B60W 30/18** (2012.01)
**B60W 50/00** (2006.01)

(52) Cooperative Patent Classification (CPC):
**B60W 60/0027; B60W 30/09; B60W 30/0956;
B60W 30/18159; B60W 50/0097; B60W 60/0015;
B60W 60/00274; B60W 60/00276;
B60W 2554/4045; B60W 2555/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.12.2024 CN 202411846335**

(71) Applicant: **Beijing Baidu Netcom
Science Technology Co., Ltd.
Beijing 100085 (CN)**

(72) Inventors:
• **CAO, Zhihui**
  **Beijing, 100085 (CN)**
• **PAN, Hongfei**
  **Beijing, 100085 (CN)**
• **GAO, Han**
  **Beijing, 100085 (CN)**
• **XIE, Yuanfan**
  **Beijing, 100085 (CN)**

(74) Representative: **Richly & Ritschel Patentanwälte
PartG mbB
Sattlerweg 20
51429 Bergisch Gladbach (DE)**

(54) **DRIVING INFORMATION PREDICTION METHOD, APPARATUS AND AUTONOMOUS VEHICLE**

(57) Provided is a driving information prediction method, apparatus, and autonomous driving vehicle, which relate to the field of autonomous driving, especially to the field of artificial intelligence, and particularly to the technical fields of autonomous driving and intelligent transportation. The method includes: determining (S110) a first leader-follower relationship between a target vehicle and a first obstacle based on a motion parameter of the target vehicle at a current moment, path information of the target vehicle at a current moment, path information of the target vehicle within a first time period, a motion parameter of the first obstacle at the current moment, and predicted path information of the first obstacle within the first time period; obtaining (S120) first predicted driving information based on the first leader-follower relationship; and determining (S130) first optimal driving information based on an evaluation result corresponding to the first predicted driving information.

Determine a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period — S110

Obtain first predicted driving information based on the first leader-follower relationship, where the first predicted driving information includes: first predicted motion parameters of the target vehicle at a plurality of prediction moments within the first time period, and second predicted motion parameters of the first obstacle at the plurality of prediction moments within the first time period — S120

Determine first optimal driving information based on an evaluation result corresponding to the first predicted driving information, where the first optimal driving information includes: optimal predicted motion parameters of the target vehicle at the plurality of prediction moments within the first time period, and optimal predicted motion parameters of the first obstacle at the plurality of prediction moments within the first time period — S130

FIG. 1

EP 4 782 292 A1

**Description**

TECHNICAL FIELD

The present disclosure relates to the field of autonomous driving, particularly to the field of artificial intelligence, and more particularly to the technical fields of autonomous driving and intelligent transportation.

BACKGROUND

With the advancement of autonomous driving technology, autonomous vehicles are gradually becoming more widespread, and automation of vehicle driving and the intelligence of transportation systems have become the dominant directions for current and future transportation development. Facing complex traffic environments, autonomous driving vehicles need to possess a high degree of intelligence and adaptability to handle unexpected events and complex traffic scenarios. Currently, they often rely on real-time data sensed by the vehicle's own sensors to assess collision risks and then predict the vehicle's driving information. However, with the increase in the number of traffic participants, the manner of simply relying on the real-time data obtained from the vehicle's sensors for assessment and then generating the vehicle's driving information cannot guarantee the accuracy of the finally predicted driving information.

SUMMARY

The present disclosure proposes a driving information prediction method and apparatus, a device and a storage medium.

In an aspect of the present disclosure, a driving information prediction method is provided. The method includes: determining a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period; obtaining first predicted driving information based on the first leader-follower relationship, where the first predicted driving information includes: first predicted motion parameters of the target vehicle at a plurality of prediction moments within the first time period, and second predicted motion parameters of the first obstacle at the plurality of prediction moments within the first time period; and determining first optimal driving information based on an evaluation result corresponding to the first predicted driving information, where the first optimal driving information includes: optimal predicted motion parameters of the target vehicle at the plurality of prediction moments within the first time period, and optimal predicted motion parameters of the first obstacle at the plurality of prediction moments within the first time period.

In an aspect of the present disclosure, a driving information prediction apparatus is provided. The apparatus includes: a leader-follower relationship determination module, configured to determine a first leader-follower relationship between a target vehicle and a first obstacle based on motion parameter of the target vehicle at a current moment, path information of the target vehicle within a first time period, motion parameter of the first obstacle at the current moment, and predicted path information of the first obstacle within the first time period; a driving information prediction module, configured to obtain first predicted driving information based on the first leader-follower relationship, where the first predicted driving information includes: first predicted motion parameters of the target vehicle at a plurality of prediction moments within the first time period, and second predicted motion parameters of the first obstacle at the plurality of prediction moments within the first time period; an optimal driving information determination module, configured to determine first optimal driving information based on an evaluation result corresponding to the first predicted driving information, where the first optimal driving information includes: optimal predicted motion parameters of the target vehicle at the plurality of prediction moments within the first time period, and optimal predicted motion parameters of the first obstacle at the plurality of prediction moments within the first time period.

In an aspect of the present disclosure, an electronic device is provided. The electronic device includes: at least one processor; and a memory communicatively connected to the at least one processor; where the memory stores instructions executable by the at least one processor, and the instructions, when executed by the at least one processor, cause the at least one processor to perform the method according to any one of embodiments of the present disclosure.

In an aspect of the present disclosure, a non-transitory computer-readable storage medium storing computer instructions thereon is provided, where the computer instructions are used to cause a computer to perform the method according to any one of embodiments of the present disclosure.

In an aspect of the present disclosure, a computer program product is provided. The computer program product includes a computer program, which, when executed by a processor, implements the method according to any one of embodiments of the present disclosure.

In an aspect of the present disclosure, an autonomous driving vehicle comprising the electronic device described above is provided.

By adopting the above-mentioned implementations, the first leader-follower relationship between the target vehicle and the obstacle can be determined in real-time by integrating the motion parameter of the target vehicle and the obstacle at the current moment and the path information of the both within the first time period in the future; and subsequently, the first predicted driving information can be obtained based on the first leader-follower relationship; finally, the first optimal driving information is determined according to the evaluation result of the first predicted driving information. Since the leader-follower relationship between traffic participants is analyzed in light of the current states and future paths of the traffic participants, and furthermore driving information thereof is predicted and evaluated to obtain the optimal driving information, the accuracy of the ultimately predicted driving information can be enhanced.

It should be understood that the content described in the summary part is not intended to identify key or important features of the embodiments of the present disclosure, and is not used to limit the scope of the present disclosure. Other features of the present disclosure will be easily understood through the following description.

BRIEF DESCRIPTION OF THE DRAWINGS

The accompanying drawings are used to better understand the solution of the present disclosure, and do not constitute a limitation to the present disclosure.

Fig. 1 is a schematic flowchart of a driving information prediction method according to an embodiment of the present disclosure.

Fig. 2 is a schematic scenario diagram of the process of obtaining the right-of-way priorities of the target vehicle and the first obstacle within the first time period according to an embodiment of the present disclosure.

Fig. 3 is a schematic scenario diagram of the process of determining the first optimal driving information according to an embodiment of the present disclosure.

Fig. 4 is a schematic scenario diagram of the process of determining a decision instruction according to an embodiment of the present disclosure.

Fig. 5 is a schematic flowchart of a driving information prediction method according to an embodiment of the present disclosure.

Fig. 6 is a schematic traffic scenario diagram according to an embodiment of the present disclosure.

Fig. 7 is a schematic block diagram of a driving information prediction apparatus according to an embodiment of the present disclosure.

Fig. 8 is a schematic block diagram of a driving information prediction apparatus according to another embodiment of the present disclosure.

Fig. 9 is a schematic block diagram of a driving information prediction apparatus according to yet another embodiment of the present disclosure.

Fig. 10 is a block diagram of an electronic device for implementing embodiments of the present disclosure.

DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope the present disclosure. Also, for clarity and conciseness, descriptions for well-known functions and structures are omitted in the following description.

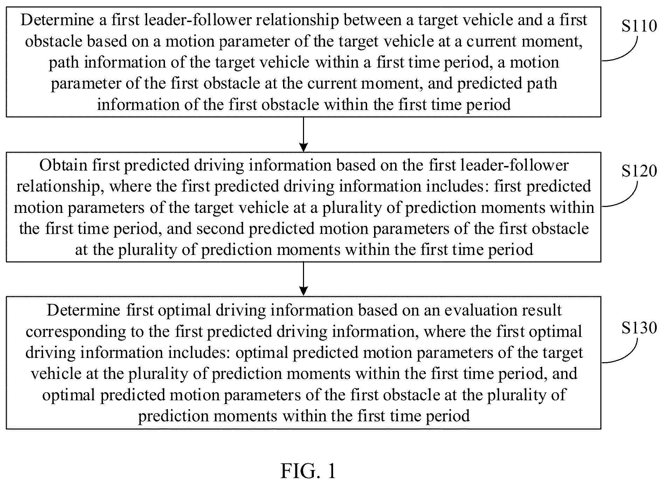

Fig. 1 is a schematic flowchart of a driving information prediction method proposed in an embodiment of the present disclosure, which includes: S110, determining a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period; S120, obtaining first predicted driving information based on the first leader-follower relationship, where the first predicted driving information includes: first predicted motion parameters of the target vehicle at a plurality of prediction moments within the first time period, and second predicted motion parameters of the first obstacle at the plurality of prediction moments within the first time period; S130, determining first optimal driving information based on an evaluation result corresponding to the first predicted driving information, where the first optimal driving information includes: optimal predicted motion parameters of the target vehicle at the plurality of prediction moments within the first time period, and optimal predicted motion parameters of the first obstacle at the plurality of prediction moments within the first time period.

The driving information prediction method of embodiments of the present disclosure may be executed by an electronic device. The electronic device may be an in-vehicle terminal installed in the target vehicle, or another terminal device with computing capabilities and capable of communicating with the target vehicle. It should be understood that the above are only exemplary descriptions of the electronic device. In actual processing, it is not limited to the devices mentioned in the above examples, and any electronic device that is capable executing the driving information prediction method provided in the embodiment is within the protection scope of the embodiment.

The first obstacle may refer to any one of all the obstacles within a designated range of the target vehicle. The designated range of the target vehicle may be a range centered on the target vehicle with a designated length as the radius. The designated length may be configured according to the actual situation. For example, the designated length may be 200 meters, 500 meters, or longer or shorter, which is not limited herein. The first obstacle may belong to any type of traffic participant, for example, the type of the first obstacle may be any one of a vehicle, a pedestrian, an animal, etc.

By adopting the above-mentioned solution, the first leader-follower relationship between the target vehicle and the obstacle can be determined in real-time by combining the motion parameters of the target vehicle and the obstacle at the current moment and the path information of the target vehicle and the obstacle within the first time period in the future; furthermore, the first predicted driving information may be obtained based on the first leader-follower relationship; and finally, the predicted optimal driving information may be determined according to the evaluation result of the first predicted driving information. Since the leader-follower relationship between traffic participants is analyzed according to the current states and future paths of the traffic participants, and then the driving information is predicted and evaluated to obtain the optimal driving information, the accuracy of the finally predicted driving information can be improved.

In some alternative implementations, the determining a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period includes: determining right-of-way priorities of the target vehicle and the first obstacle within the first time period based on the motion parameter of the target vehicle at the current moment, the path information of the target vehicle within the first time period, the motion parameter of the first obstacle at the current moment, and the predicted path information of the first obstacle within the first time period; determining the first leader-follower relationship between the target vehicle and the first obstacle based on the right-of-way priorities of the target vehicle and the first obstacle within the first time period.

The determining right-of-way priorities of the target vehicle and the first obstacle within the first time period based on the motion parameter of the target vehicle at the current moment, the path information of the target vehicle within the first time period, the motion parameter of the first obstacle at the current moment, and the predicted path information of the first obstacle within the first time period includes: obtaining a driving type of the target vehicle within the first time period based on the motion parameter of the target vehicle at the current moment and the path information of the target vehicle within the first time period; obtaining a driving type of the first obstacle within the first time period based on the motion parameter of the first obstacle at the current moment and the predicted path information of the first obstacle within the first time period; and obtaining the right-of-way priorities of the target vehicle and the first obstacle within the first time period based on the driving type of the target vehicle within the first time period and the driving type of the first obstacle within the first time period.

The motion parameters may include at least one of: position, velocity, orientation, or acceleration.

The driving type may also be alternatively called the driving mode. For example, the driving type of the target vehicle within the first time period may be any one of a variety of optional driving types. The variety of optional driving types includes at least one of: going straight, turning left, turning right, or changing lanes, etc.

The process of obtaining the driving type of the target vehicle within the first time period based on the motion parameter of the target vehicle at the current moment and the path information of the target vehicle within the first time period may include: using the high-definition map information, the position of the target vehicle at the current moment, the velocity of the target vehicle at the current moment, the orientation of the target vehicle at the current moment, and the path information of the target vehicle within the first time period as first input parameters; performing calculation on the first input parameters by using the first calculation function to obtain the driving type of the target vehicle within the first time period. The first calculation function may be configured according to actual needs, which is not limited in the embodiment.

Here, the motion parameter of the target vehicle at the current moment may be determined by combining high-definition data and positioning information, which is not limited in the embodiment.

The path information of the target vehicle within the first time period may be determined based on high-definition data and positioning information, and pre-planned information provided by a pre-planning system. The path information of the target vehicle within the first time period may also be simply called the path of the target vehicle within the first time period, or the pre-planned path of the target vehicle, etc. The determination method thereof is not limited in the embodiment. The path information of the target vehicle within the first time period refers to the path along which the target vehicle will drive within the first time period. The start moment of the first time period may be the current moment, and the duration of the first time period may be configured according to the actual situation. For example, the duration may be 10 seconds, 1 minute, or longer or shorter, which is not limited herein.

For example, using a first calculation function to perform calculation on the first input parameters, to obtain the driving type of the target vehicle within the first time period which may be expressed as:

$$D_{adc} = \mathcal{F}^{D}_{adc}(M, P_{adc}, V_{adc}, H_{adc}, T, S_{adc});$$

where $D_{adc}$ is the driving type of the target vehicle within the first time period; $\mathcal{F}^{D}_{adc}$ is the first calculation function; M is high-definition map information; $P_{adc}$ is the position of the target vehicle at the current moment; $V_{adc}$ is the velocity of the target vehicle at the current moment; $H_{adc}$ is the orientation of the target vehicle at the current moment; T denotes the first time period; $S_{adc}$ is the path information of the target vehicle within the first time period.

The process of obtaining the driving type of the first obstacle within the first time period based on the motion parameter of the first obstacle at the current moment and the predicted path information of the first obstacle within the first time period may include: using the high-definition map information, the position of the first obstacle at the current moment, the velocity of the first obstacle at the current moment, the orientation of the first obstacle at the current moment, the predicted path information of the first obstacle within the first time period, the driving type of the target vehicle within the first time period, and the traffic flow type of the first obstacle as second input parameters; performing calculation on the second input parameters by using a second calculation function, to obtain the driving type of the first obstacle within the first time period. The second calculation function may be the same as or different from the first calculation function, which are both within the protection scope of the embodiment. The second calculation function may be configured according to actual needs, which is not limited in the embodiment.

The motion parameter of the first obstacle at the current moment and the predicted path information of the first obstacle within the first time period may be determined based on perception and prediction information, high-definition data and positioning information. The detailed perception method is not limited in the embodiment. The predicted path information of the first obstacle within the first time period refers to the path along which the first obstacle is predicted to drive within the first time period.

The traffic flow type of the first obstacle may be any one of a variety of optional traffic flow types. The variety of optional traffic flow types may be obtained by dividing according to at least one of the driving direction, or driving speed, etc. For example, the variety of optional traffic flow types may be at least one of the following which are obtained by dividing according to the driving direction: straight-moving vehicle, turning vehicle, U-turning vehicle, merging vehicle, or exiting vehicle, etc.; for another example, the variety of optional traffic flow types may be at least one of the following obtained by dividing according to speed: high-speed traffic flow, medium-speed traffic flow, or low-speed traffic flow, etc.; for yet another example, the variety of optional traffic flow types may be obtained by dividing according to both the driving direction and speed. It should be noted that the dividing manners for obtaining the variety of optional traffic flow types may include, but are not limited to, the above-mentioned dividing manners, and there may be other dividing manners to obtain a variety of optional traffic flow types, which is not limited in the embodiment and no exhaustive listings is made here.

The traffic flow type of the first obstacle may be any one of a variety of optional traffic flow types determined based on a traffic flow division strategy. The traffic flow division strategy may be pre-configured, but is not limited the embodiment.

Performing calculation on the second input parameters by using a second calculation function, to obtain the driving type of the first obstacle within the first time period may be expressed as:

$$D_{obs} = \mathcal{F}^{D}_{obs}(M, P_{obs}, V_{obs}, H_{obs}, L_{obs}, D_{adc}, F_{obs}),$$

where $D_{obs}$ is the driving type of the first obstacle within the first time period; $\mathcal{F}^{D}_{obs}$ is the second calculation function; $P_{obs}$ is the position of the first obstacle at the current moment; $V_{obs}$ is the velocity of the first obstacle at the current moment; $H_{obs}$ is the orientation of the first obstacle at the current moment; $L_{obs}$ represents the predicted path information of the first obstacle within the first time period; $F_{obs}$ is the traffic flow type of the first obstacle.

The right-of-way priorities of the target vehicle and the first obstacle within the first time period may include: the relative right-of-way priority of the target vehicle with respect to the first obstacle within the first time period, and the relative right-of-way priority of the first obstacle with respect to the target vehicle within the first time period. Here, the relative right-of-way priority may be represented by a first value or a second value. For example, if the relative right-of-way priority of the target vehicle with respect to the first obstacle within the first time period is the first value, and the relative right-of-way priority of the first obstacle with respect to the target vehicle within the first time period is the second value, it means that the target vehicle has a high right-of-way priority with respect to the first obstacle within the first time period, and the first obstacle has a low right-of-way priority with respect to the target vehicle within the first time period. The second value is different from the first value, and the first value and the second value may be configured according to actual situations. For example, the first value may be 1, the second value may be 0, or vice versa. This embodiment does not limit or exhaust all possible values of the first value and the second value.

Obtaining the right-of-way priorities of the target vehicle and the first obstacle within the first time period based on the driving type of the target vehicle within the first time period and the driving type of the first obstacle within the first time period, may include: obtaining the right-of-way priorities of the target vehicle and the first obstacle within the first time period, based on the driving type of the target vehicle within the first time period, the initial predicted motion parameters of the target vehicle at a plurality of prediction moments within the first time period, the driving type of the first obstacle within the first time period, and the initial predicted motion parameters of the first obstacle at a plurality of prediction moments within the first time period.

Here, the initial predicted motion parameters of the target vehicle at a plurality of prediction moments within the first time period may be determined based on the path information of the target vehicle within the first time period and the motion parameter of the target vehicle at the current moment. The specific method for determining the initial predicted motion parameters of the target vehicle at a plurality of prediction moments within the first time period is not limited in this embodiment. For example, the initial predicted motion parameters of the target vehicle at a plurality of prediction moments within the first time period may be determined by a pre-decision-making module based on a pre-configured strategy, or calculated by a pre-decision-making algorithm within the pre-decision-making module, which is not exhaustively listed in the embodiment.

The initial predicted motion parameters of the first obstacle at a plurality of prediction moments within the first time period may be determined based on the predicted path information of the first obstacle within the first time period and the motion parameter of the first obstacle at the current moment. The specific method for determining the initial predicted motion parameters of the first obstacle at a plurality of prediction moments within the first time period, is not limited in this embodiment.

The specific processing manner for obtaining the right-of-way priorities of the target vehicle and the first obstacle within the first time period based on the driving type of the target vehicle within the first time period, the initial predicted motion parameters of the target vehicle at a plurality of prediction moments within the first time period, the driving type of the first obstacle within the first time period, and the initial predicted motion parameters of the first obstacle at a plurality of prediction moments within the first time period, is not limited in the embodiment.

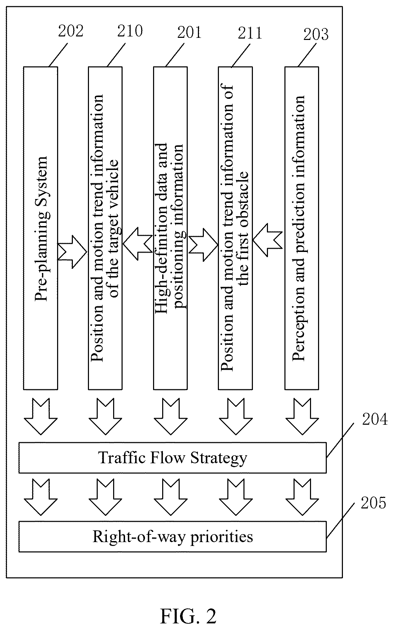

An exemplary explanation of the process of obtaining the right-of-way priorities of the target vehicle and the first obstacle within the first time period is provided in combination with Fig. 2.

First, the motion parameter of the target vehicle at the current moment is determined by combining high-definition data and positioning information 201, and the path information of the target vehicle within the first time period is determined according to the pre-planned information provided by the pre-planning system 202. The motion parameter of the target vehicle at the current moment and the path information of the target vehicle within the first time period may jointly serve as the position and motion trend information 210 of the target vehicle. Based on the motion parameter of the target vehicle at the current moment and the path information of the target vehicle within the first time period, the driving type of the target vehicle within the first time period is obtained.

Then, the position and motion trend information 211 of the first obstacle (i.e.,, the motion parameter of the first obstacle at the current moment and the predicted path information of the first obstacle within the first time period (e.g., denoted as T, where T is a positive number) in the future) is determined by using high-definition data and positioning information 201 and perception and prediction information 203. The driving type of the first obstacle within the first time period is obtained based on the motion parameter of the first obstacle at the current moment, the predicted path information of the first obstacle within the first time period, and the traffic flow strategy 204 (i.e., the traffic flow type of the first obstacle), etc..

The above-mentioned processing process not only relies on static high-definition data (such as high-definition map information) but also may need to obtain real-time perception and prediction data, and the output results of pre-decision-making, etc., to ensure an accurate understanding of the surrounding environment, so as to accurately analyze and obtain the driving types of the target vehicle and the first obstacle within the first time period. In this way, the intentions of the target vehicle and the first obstacle and potential risks may be preliminarily understood. By integrating those information, the system may build a relatively comprehensive environmental model, laying a solid foundation for subsequent yielding-overtaking interaction simulation, collision risk, and trajectory rationality evaluation.

Finally, through the in-depth analysis of the driving types of the target vehicle and the first obstacle within the first time period, the right-of-way priorities 205 of the target vehicle and the first obstacle within the first time period are determined. The determination of the right-of-way priorities 205 of the target vehicle and the first obstacle within the first time period may be based on pre-configured priority-related strategies or algorithms, which is not limited here. After the right-of-way priorities 205 of the target vehicle and the first obstacle within the first time period are determined, processing by adopting encoding manners may be performed thereon to obtain the encoded content required for subsequent processing. For example, the encoded content may include at least one of: the right-of-way priorities 205 of the target vehicle and the first obstacle within the first time period, the initial predicted motion parameters of the target vehicle at a plurality of prediction moments within the first time period, the initial predicted motion parameters of the first obstacle at a plurality of prediction moments within the first time period, or the traffic flow type of the first obstacle, etc..

In this way, the driving types of the target vehicle and the first obstacle may be obtained respectively by using the motion parameters of the target vehicle and the first obstacle at the current moment and the path information of the target vehicle and the first obstacle within the first time period in the future. Furthermore, the relative right-of-way priorities of the target vehicle and the first obstacle may be determined based on the driving types of the target vehicle and the first obstacle. Thus, the driving types are determined by combining the motion parameters of the target vehicle and the first obstacle at the current moment, so that the real-time performance and accuracy of the driving types of the target vehicle and the first obstacle may be ensured, and furthermore, the real-time performance and accuracy of the determined relative right-of-way priorities of the target vehicle and the first obstacle may be guaranteed.

The first leader-follower relationship between the target vehicle and the first obstacle may include the object in the leader position and the object in the follower position among the target vehicle and the first obstacle within the first time period. Here, the object in the leader position may be the one that passes through the predicted intersection area first among the target vehicle and the first obstacle, and the object in the follower position may be the one that passes through the predicted intersection area later among the target vehicle and the first obstacle.

The first leader-follower relationship between the target vehicle and the first obstacle may be determined based on a preset relevant strategy and the right-of-way priorities of the target vehicle and the first obstacle within the first time period, or may be obtained by processing the right-of-way priorities of the target vehicle and the first obstacle within the first time period by using a preset leader-follower relationship analysis model, which is not limited or exhaustively listed herein.

Exemplarily, the determining the first leader-follower relationship between the target vehicle and the first obstacle based on the right-of-way priorities of the target vehicle and the first obstacle within the first time period includes: determining a predicted intersection area based on initial predicted motion parameters of the target vehicle at the plurality of prediction moments within the first time period and initial predicted motion parameters of the first obstacle at the plurality of prediction moments within the first time period; determining the first leader-follower relationship between the target vehicle and the first obstacle based on the right-of-way priorities of the target vehicle and the first obstacle within the first time period, the predicted intersection area and reference information, where the reference information includes at least one of the following: a driving type of the target vehicle, a driving type of the first obstacle, the motion parameter of the target vehicle at the current moment, the motion parameter of the first obstacle at the current moment, the initial predicted motion parameters of the target vehicle at the plurality of prediction moments within the first time period, or the initial predicted motion parameters of the first obstacle at the plurality of prediction moments within the first time period.

For example, determining a predicted intersection area based on the initial predicted motion parameters of the target vehicle at a plurality of prediction moments within the first time period and the initial predicted motion parameters of the first obstacle at a plurality of prediction moments within the first time period; determining, among the target vehicle and the first obstacle, the object that first passes through the predicted intersection area based on the right-of-way priorities of the target vehicle and the first obstacle within the first time period, the initial predicted motion parameters of the target vehicle at a plurality of prediction moments within the first time period, and the initial predicted motion parameters of the first obstacle at a plurality of prediction moments within the first time period. The object that first passes through the predicted intersection area is served as the object in the leader position in the first leader-follower relationship, and the other object is served as the object in the follower position in the first leader-follower relationship. The specific method for determining the object that first passes through the predicted intersection area among the target vehicle and the first obstacle is not limited herein.

For example, determining a predicted intersection area based on the initial predicted motion parameters of the target vehicle at a plurality of prediction moments within the first time period and the initial predicted motion parameters of the first obstacle at a plurality of prediction moments within the first time period; determining a first distance between the target vehicle and the predicted intersection area and a second distance between the first obstacle and the predicted intersection area based on the motion parameter of the target vehicle at the current moment and the motion parameter of the first obstacle at the current moment; determining the first leader-follower relationship between the target vehicle and the first obstacle based on the first distance, the second distance, and the right-of-way priorities of the target vehicle and the first obstacle within the first time period. As an example, assume that the first distance is close to the second distance, that is, the difference between the first distance and the second distance is not greater than a designated distance threshold (the designated distance threshold may be configured according to the actual situation, and may be 10 meters, 20 meters, or longer or shorter), and in this case, since the difference between the first distance and the second distance is not significant, the time durations for the target vehicle and the first obstacle to reach the predicted intersection area may be further predicted based on the motion parameters of the target vehicle and the first obstacle at the current moment. If the time durations for the target vehicle and the first obstacle to reach the predicted intersection area are basically the same, the one with a higher relative right-of-way priority among the target vehicle and the first obstacle may be determined as the object that first passes through the predicted intersection area, that is, as the object in a leader position in the first leader-follower relationship, and the other one is regarded as the object in a follower position.

The above are only exemplary explanations. In actual processing, other manners or strategies may also be used to determine the first leader-follower relationship between the target vehicle and the first obstacle.

As an alternative example, the method for determining the first leader-follower relationship may include: determining a predicted intersection area based on the initial predicted motion parameters of the target vehicle at a plurality of prediction moments within the first time period and the initial predicted motion parameters of the first obstacle at a plurality of prediction moments within the first time period; determining a first distance between the target vehicle and the predicted intersection area and a second distance between the first obstacle and the predicted intersection area based on the motion parameter of the target vehicle at the current moment and the motion parameter of the first obstacle at the current moment; and determining the first leader-follower relationship between the target vehicle and the first obstacle based on the first distance, the second distance, and at least one of the following: the driving type of the target vehicle, the driving type of the first obstacle, the motion parameter of the target vehicle at the current moment, the motion parameter of the first obstacle at the current moment, the initial predicted motion parameters of the target vehicle at a plurality of prediction moments within the first time period, or the initial predicted motion parameters of the first obstacle at a plurality of prediction moments within the first time period.

For example, assume that the first distance is much larger than the second distance. For example, the difference between the first distance and the second distance is greater than a designated distance threshold, or the first distance is greater than the a designated multiple of second distance. The designated multiple may be configured according to the actual situation, for example, the designated multiple may be 2 times, 3 times, or larger, which is not limited or exhaustively listed herein. In this case, since the first distance is much larger than the second distance, it may be determined that the target vehicle is much farther from the intersection position than the first obstacle, and it may be determined that in the first leader-follower relationship the first obstacle is in a leader position and the target vehicle is in a follower position.

Assume that the first distance is close to the second distance, for example, the difference between the first distance and the second distance is not greater than the designated distance threshold. In this case, since the difference between the first distance and the second distance is not significant, the first leader-follower relationship may be further determined based on the right-of-way priorities of the target vehicle and the first obstacle within the first time period and at least one of the following: the driving type of the target vehicle, the driving type of the first obstacle, the motion parameter of the target vehicle at the current moment, the motion parameter of the first obstacle at the current moment, the initial predicted motion parameters of the target vehicle at a plurality of prediction moments within the first time period, or the initial predicted motion parameters of the first obstacle at a plurality of prediction moments within the first time period. For example, the time lengths for the target vehicle and the first obstacle to reach the predicted intersection area are determined based on the motion parameters of the target vehicle and the first obstacle at the current moment respectively, and the object with a shorter time length to reach the predicted intersection area is determined as the object in a leader position in the first leader-follower relationship, and the object with a longer time length to reach the predicted intersection area is determined as the object in a follower position in the first leader-follower relationship.

It should be noted that the above are all exemplary explanations. In actual processing, other methods or strategies may also be used to determine the first leader-follower relationship between the target vehicle and the first obstacle, which is not limited or exhaustively listed in the embodiment.

In this way, the relative right-of-way priorities of the target vehicle and the first obstacle may be determined first, and then the first leader-follower relationship between the target vehicle and the first obstacle may be determined based on the right-of-way priorities thereof. Accordingly, the determination of the first leader-follower relationship between the target vehicle and the first obstacle is more accurate, thereby ensuring the accuracy of the subsequently predicted driving information.

In some alternative implementations, the obtaining first predicted driving information based on the first leader-follower relationship includes: performing forward simulation based on the first leader-follower relationship, the motion parameter of the target vehicle at the current moment, and the motion parameter of the first obstacle at the current moment, to obtain the first predicted motion parameters of the target vehicle at the plurality of prediction moments within the first time period and the second predicted motion parameters of the first obstacle at the plurality of prediction moments within the first time period; and using the first predicted motion parameters of the target vehicle at the plurality of prediction moments within the first time period and the second predicted motion parameters of the first obstacle at the plurality of prediction moments within the first time period as the first predicted driving information.

Here, the performing forward simulation based on the first leader-follower relationship, the motion parameter of the target vehicle at the current moment, and the motion parameter of the first obstacle at the current moment, to obtain the first predicted motion parameters of the target vehicle at the plurality of prediction moments within the first time period and the second predicted motion parameters of the first obstacle at the plurality of prediction moments within the first time period, may include: performing, based on the forward simulation manner, a plurality of iterative processes on the first leader-follower relationship, the motion parameter of the target vehicle at the current moment, and the motion parameter of the first obstacle at the current moment, to obtain the first predicted motion parameters of the target vehicle at a plurality of prediction moments within the first time period and the second predicted motion parameters of the first obstacle at the plurality of prediction moments within the first time period.

Exemplarily, the performing, based on the forward simulation manner, a plurality of iterative processes on the first leader-follower relationship, the motion parameter of the target vehicle at the current moment, and the motion parameter of the first obstacle at the current moment, to obtain the first predicted motion parameters of the target vehicle at a plurality of prediction moments within the first time period and the second predicted motion parameters of the first obstacle at the plurality of prediction moments within the first time period, may include: in the i-th iterative process, using the first leader-follower relationship, the motion parameters of the target vehicle at the i-th moment, and the motion parameters of the first obstacle at the i-th moment as the i-th input parameters, processing the i-th input parameters based on the forward simulation manner to predict and obtain the first predicted motion parameters of the target vehicle at the (i+1)-th prediction moment and the second predicted motion parameters of the first obstacle at the (i+1)-th prediction moment; if the (i+1)-th prediction moment is the last prediction moment within the first time period, determining that the plurality of iterative processes are completed, and obtaining the first predicted motion parameters of the target vehicle at a plurality of prediction moments within the first time period and the second predicted motion parameters of the first obstacle at the plurality of prediction moments within the first time period. Here, if i is equal to 1, the i-th moment is the current moment; if i is an integer greater than 1, the i-th moment is the i-th prediction moment.

In addition, the performing, based on the forward simulation manner, a plurality of iterative processes on the first leader-follower relationship, the motion parameter of the target vehicle at the current moment, and the motion parameter of the first obstacle at the current moment, to obtain the first predicted motion parameters of the target vehicle at a plurality of prediction moments within the first time period and the second predicted motion parameters of the first obstacle at the plurality of prediction moments within the first time period, may further include: if the (i+1)-th prediction moment is not the last prediction moment within the first time period, returning to perform the (i+1)-th iterative process. The (i+1)-th iterative process is similar to the i-th iterative process, so it will not be elaborated.

The forward simulation manner may include: Stackelberg gaming or Monte-Carlo tree search method, etc. The algorithms or methods that may be used for the forward simulation manner are not limited or exhausted here.

The first predicted motion parameters of the target vehicle at a plurality of prediction moments within the first time period may include: a first predicted motion parameter of the target vehicle at each prediction moment among the plurality of prediction moments within the first time period. Here, the first predicted motion parameter at any one prediction moment includes at least one of the following: a first predicted velocity at any one prediction moment, a first predicted position at any one prediction moment, or a first predicted orientation at any one prediction moment.

The second predicted motion parameters of the first obstacle at a plurality of prediction moments within the first time period may include: a second predicted motion parameter of the first obstacle at each prediction moment among the plurality of prediction moments within the first time period. Here, the second predicted motion parameter at any one prediction moment includes at least one of the following: a second predicted velocity at any one prediction moment, a second predicted position at any one prediction moment, or a second predicted orientation at any one prediction moment.

In this way, by using the current motion parameter of the target vehicle, the current motion parameter of the first obstacle obtained from real-time perception, and combining with the real-time determined first leader-follower relationship between the target vehicle and the first obstacle, to jointly perform forward simulation, the motion parameters of the target vehicle and the first obstacle at a plurality of future prediction moments are predicted, ensuring the real-time performance and accuracy of the prediction results.

In some alternative implementations, the determining first optimal driving information based on an evaluation result corresponding to the first predicted driving information includes one of following: in response to the evaluation result corresponding to the first predicted driving information satisfying a first condition, using the first predicted driving information as the first optimal driving information; in response to the evaluation result corresponding to the first predicted driving information not satisfying the first condition, alternating the first leader-follower relationship to obtain a second leader-follower relationship between the target vehicle and the first obstacle, obtaining second predicted driving information based on the second leader-follower relationship, and determining, from the first predicted driving information and the second predicted driving information, the first optimal driving information based on an evaluation result corresponding to the second predicted driving information and the evaluation result corresponding to the first predicted driving information.

The first condition includes at least one of: a first safety evaluation value in the evaluation result corresponding to the first predicted driving information is higher than a safety threshold, or a first somatosensory evaluation value in the evaluation result corresponding to the first predicted driving information is higher than a somatosensory evaluation threshold. The first condition may be used to measure whether the first predicted driving information meets the safety requirements and/or somatosensory requirements. Here, the safety threshold may also be called the safety requirement threshold, and the somatosensory evaluation threshold may also be called the somatosensory requirement threshold. Both the safety threshold and the somatosensory evaluation threshold may be configured according to the actual situation, which is not limited in the embodiment.

The method also includes at least one of: calculating to obtain a first safety evaluation value in the evaluation result corresponding to the first predicted driving information based on a safety evaluation formula, the first leader-follower relationship and the first predicted driving information; calculating to obtain a first somatosensory evaluation value in the evaluation result corresponding to the first predicted driving information based on a somatosensory evaluation formula, the first leader-follower relationship and the first predicted driving information; calculating to obtain a second safety evaluation value in the evaluation result corresponding to the second predicted driving information based on the safety evaluation formula, the second leader-follower relationship and the second predicted driving information; or calculating to obtain a second somatosensory evaluation value in the evaluation result corresponding to the second predicted driving information based on the somatosensory evaluation formula, the second leader-follower relationship, and the second predicted driving information.

Preferably, the evaluation result corresponding to the first predicted driving information may include the first safety evaluation value and the first somatosensory evaluation value. In this case, the first condition includes that the first safety evaluation value in the evaluation result corresponding to the first predicted driving information is higher than the safety threshold, and the first somatosensory evaluation value in the evaluation result corresponding to the first predicted driving information is higher than the somatosensory evaluation threshold.

The first safety evaluation value may be used to represent the level of the collision risk between the target vehicle and the first obstacle corresponding to the first predicted driving information. The higher the first safety evaluation value is, then the lower the collision risk is; the lower the first safety evaluation value is, then the higher the collision risk is.

The way to obtain the first safety evaluation value in the evaluation result corresponding to the first predicted driving information may include: calculating to obtain the first safety evaluation value in the evaluation result corresponding to the first predicted driving information based on the safety evaluation formula, the first leader-follower relationship, and the first predicted driving information. Here, the safety evaluation formula may be configured according to the actual situation.

For example, the calculating to obtain the first safety evaluation value in the evaluation result corresponding to the first predicted driving information based on the safety evaluation formula, the first leader-follower relationship, and the first predicted driving information, may be expressed as:

$$R_c^+ = S_R(P_{adc-P1}, P_{obs-P1}, V_{adc-P1}, V_{obs-P1}, H_{adc-P1}, H_{obs-P1}, O^+);$$

where $R_c^+$ represents the first safety evaluation value in the evaluation result corresponding to the first predicted driving information, $S_R()$ represents the safety evaluation formula, $P_{adc-P1}$ may represent the first predicted positions of the target vehicle at a plurality of prediction moments within the first time period in the first predicted driving information, $P_{obs-P1}$ represents the second predicted positions of the first obstacle at a plurality of prediction moments within the first time period in the first predicted driving information, $V_{adc-P1}$ may represent the first predicted velocities of the target vehicle at a plurality of prediction moments within the first time period in the first predicted driving information, $V_{obs-P1}$ represents the second predicted velocities of the first obstacle at a plurality of prediction moments within the first time period in the first predicted driving information, $H_{adc-P1}$ may represent the first predicted orientations of the target vehicle at a plurality of prediction moments within the first time period in the first predicted driving information, $H_{obs-P1}$ represents the second predicted orientations of the first obstacle at a plurality of prediction moments within the first time period in the first predicted driving information, and $O^+$ represents the first leader-follower relationship.

The first somatosensory evaluation value may be used to represent one's somatosensory experience during the interaction between the target vehicle and the first obstacle corresponding to the first predicted driving information. Here, the somatosensory experience may refer to the pushing-back feeling of a person generated due to acceleration during the interaction between the target vehicle and the first obstacle, and/or the forward-leaning state of a person generated due to deceleration during the interaction between the target vehicle and the first obstacle. Here, the person mentioned above may include at least one of: the driver in the target vehicle, the passenger in the target vehicle, the driver in the first obstacle, or the passenger in the first obstacle. If the first somatosensory evaluation value is higher, it means that one's somatosensory experience during the interaction between the target vehicle and the first obstacle is better; if the first somatosensory evaluation value is lower, it means one's somatosensory experience during the interaction between the target vehicle and the first obstacle is worse.

The way to obtain the first somatosensory evaluation value in the evaluation result corresponding to the first predicted driving information may include: calculating to obtain the first somatosensory evaluation value in the evaluation result corresponding to the first predicted driving information based on the somatosensory evaluation formula, the first leader-follower relationship, and the first predicted driving information.

For example, the calculating to obtain the first somatosensory evaluation value in the evaluation result corresponding to the first predicted driving information based on the somatosensory evaluation formula, the first leader-follower relationship, and the first predicted driving information may be expressed as:

$$L_S^+ = S_L(P_{adc-P1}, P_{obs-P1}, V_{adc-P1}, V_{obs-P1}, H_{adc-P1}, H_{obs-P1}, O^+);$$

where $L_S^+$ represents the first somatosensory evaluation value in the evaluation result corresponding to the first predicted driving information, $S_L()$ represents the somatosensory evaluation formula, and the meanings of the other items are the same as in the previous example, and thus repeated description is omitted.

Determining whether the evaluation result corresponding to the first predicted driving information satisfies the first condition may include: determining whether the first safety evaluation value in the evaluation result corresponding to the first predicted driving information is higher than the safety threshold, and determining whether the first somatosensory evaluation value in the evaluation result corresponding to the first predicted driving information is higher than the somatosensory evaluation threshold. Further, if the first safety evaluation value in the evaluation result corresponding to the first predicted driving information is higher than the safety threshold and the first somatosensory evaluation value in the evaluation result corresponding to the first predicted driving information is higher than the somatosensory evaluation threshold, it is determined that the first condition is satisfied; or if the first safety evaluation value in the evaluation result corresponding to the first predicted driving information is not higher than the safety threshold and/or the first somatosensory evaluation value in the evaluation result corresponding to the first predicted driving information is not higher than the somatosensory evaluation threshold, it is determined that the first condition is not satisfied.

Alternatively, the evaluation result corresponding to the first predicted driving information may include a first safety evaluation value. The processing method for obtaining the first safety evaluation value in the evaluation result corresponding to the first predicted driving information is the same as that in the previous embodiment, and thus repeated description is omitted.

In this case, the first condition includes that the first safety evaluation value in the evaluation result corresponding to the first predicted driving information is higher than the safety threshold. In detail, determining whether the evaluation result corresponding to the first predicted driving information satisfies the first condition may include: determining whether the first safety evaluation value in the evaluation result corresponding to the first predicted driving information is higher than the safety threshold. Further, if the first safety evaluation value in the evaluation result corresponding to the first predicted driving information is higher than the safety threshold, it is determined that the first condition is satisfied; or if the first safety evaluation value in the evaluation result corresponding to the first predicted driving information is not higher than the safety threshold, it is determined that the first condition is not satisfied.

Alternatively, the evaluation result corresponding to the first predicted driving information may include a first somatosensory evaluation value. The processing method for obtaining the first somatosensory evaluation value in the evaluation result corresponding to the first predicted driving information is the same as that in the previous example, and thus repeated description is omitted.

In this case, the first condition includes that the first somatosensory evaluation value in the evaluation result corresponding to the first predicted driving information is higher than the somatosensory evaluation threshold. In detail, determining whether the evaluation result corresponding to the first predicted driving information satisfies the first condition may include: determining whether the first somatosensory evaluation value in the evaluation result corresponding to the first predicted driving information is higher than the somatosensory evaluation threshold. Further, if the first somatosensory evaluation value in the evaluation result corresponding to the first predicted driving information is higher than the somatosensory evaluation threshold, it is determined that the first condition is satisfied; or if the first somatosensory evaluation value in the evaluation result corresponding to the first predicted driving information is not higher than the somatosensory evaluation threshold, it is determined that the first condition is not satisfied.

In an example, that the evaluation result corresponding to the first predicted driving information satisfies the first condition may mean that the first predicted driving information can meet the safety requirements and/or somatosensory requirements. Therefore, in this type of example, the first predicted driving information may be directly taken as the first optimal driving information, that is, the optimal predicted motion parameters of the target vehicle at a plurality of prediction moments within the first time period in the first optimal driving information are the first predicted motion parameters of the target vehicle at the plurality of prediction moments within the first time period, and the optimal predicted motion parameters of the first obstacle at the plurality of prediction moments within the first time period in the first optimal driving information are the second predicted motion parameters of the first obstacle at the plurality of prediction moments within the first time period.

In an example, that the evaluation result corresponding to the first predicted driving information does not satisfy the first condition may mean that the first predicted driving information does not meet the safety requirements and/or somatosensory requirements. Therefore, in this type of example, the following processing may be further performed: alternating the first leader-follower relationship to obtain the second leader-follower relationship between the target vehicle and the first obstacle; obtaining the second predicted driving information based on the second leader-follower relationship; and determining, from the first predicted driving information and the second predicted driving information, the first optimal driving information based on the evaluation result corresponding to the second predicted driving information and the evaluation result corresponding to the first predicted driving information.

In this way, by using the first condition that can be used to measure whether the predicted driving information meets the safety requirements and/or somatosensory requirements, the first predicted driving information corresponding to the first leader-follower relationship may be evaluated, ensuring the safety and/or somatosensory experience of the finally obtained first optimal driving information.

Alternating the first leader-follower relationship to obtain the second leader-follower relationship between the target vehicle and the first obstacle may refer to swapping the object in a leader position and the object in a follower position among the target vehicle and the first obstacle within the first time period in the first leader-follower relationship to obtain the second leader-follower relationship between the target vehicle and the first obstacle. For example, in the first leader-follower relationship, the target vehicle is the object in a leader position and the first obstacle is the object in a follower position; after alternating the first leader-follower relationship to obtain the second leader-follower relationship, in the obtained second leader-follower relationship, the first obstacle is the object in a leader position and the target vehicle is the object in a follower position.

Obtaining second predicted driving information based on the second leader-follower relationship may include: performing forward simulation based on the second leader-follower relationship, the motion parameter of the target vehicle at the current moment, and the motion parameter of the first obstacle at the current moment, to obtain third predicted motion parameters of the target vehicle at the plurality of prediction moments within the first time period and fourth predicted motion parameters of the first obstacle at the plurality of prediction moments within the first time period; and using the third predicted motion parameters of the target vehicle at the plurality of prediction moments within the first time period and the fourth predicted motion parameters of the first obstacle at the plurality of prediction moments within the first time period as the second predicted driving information.

Here, the processing method of performing forward simulation to obtain the third predicted motion parameters of the target vehicle at a plurality of prediction moments within the first time period and the fourth predicted motion parameters of the first obstacle at the plurality of prediction moments within the first time period is similar to the manner of obtaining the first predicted motion parameters of the target vehicle at a plurality of prediction moments within the first time period and the second predicted motion parameters of the first obstacle at the plurality of prediction moments within the first time period in the previous embodiment, and thus repeated description is omitted.

The third predicted motion parameters of the target vehicle at a plurality of prediction moments within the first time period may include: a third predicted motion parameter of the target vehicle at each prediction moment among the plurality of prediction moments within the first time period. Here, the third predicted motion parameter at any one prediction moment includes at least one of: a third predicted velocity at any one prediction moment, a third predicted position at any one prediction moment, or a third predicted orientation at any one prediction moment.

The fourth predicted motion parameters of the first obstacle at a plurality of prediction moments within the first time period may include: a fourth predicted motion parameter of the first obstacle at each prediction moment among the plurality of prediction moments within the first time period. Here, the fourth predicted motion parameter at any one prediction moment includes at least one of: a fourth predicted velocity at any one prediction moment, a fourth predicted position at any one prediction moment, or a fourth predicted orientation at any one prediction moment.

It should be noted that although the process of obtaining the second predicted driving information and the process of obtaining first predicted driving information both use the motion parameter of the target vehicle at the current moment and the motion parameter of the first obstacle at the current moment as inputs, the processes use different leader-follower relationships. For example, in the first leader-follower relationship, the target vehicle is in a leader position and the first obstacle is in a follower position, while in the second leader-follower relationship, the target vehicle is in a follower position and the first obstacle is in a leader position. To meet the requirement that the object in the leader position (the first and second leader-follower relationships have different objects in the leader position) pass through the predicted intersection area first, the predicted motion parameters of the target vehicle and the first obstacle at a prediction moment included in the second predicted driving information may be different from the predicted motion parameters of the target vehicle and the first obstacle at the same prediction moment included in the first predicted driving information. In detail, the third predicted motion parameter of the target vehicle at the first prediction moment within the first time period may be same as or different from the first predicted motion parameter of the target vehicle at the first prediction moment within the first time period. For example, at least one of the third predicted velocity, the third predicted position, or the third predicted orientation of the target vehicle at the first prediction moment within the first time period may be different from at least one of the first predicted velocity, the first predicted position, or the first predicted orientation of the target vehicle at the first prediction moment within the first time period. The fourth predicted motion parameter of the first obstacle at the first prediction moment within the first time period may be same as or different from the second predicted motion parameter of the first obstacle at the first prediction moment within the first time period. For example, at least one of the fourth predicted velocity, the fourth predicted position, or the fourth predicted orientation of the first obstacle at the first prediction moment within the first time period may be different from at least one of the second predicted velocity, the second predicted position, or the second predicted orientation of the first obstacle at the first prediction moment within the first time period.

Preferably, the evaluation result corresponding to the first predicted driving information includes a first safety evaluation value and a first somatosensory evaluation value. And the evaluation result corresponding to the second predicted driving information may include a second safety evaluation value and a second somatosensory evaluation value.

The descriptions of the first safety evaluation value and the first somatosensory evaluation value are the same as those in the previous embodiment, and repeated description is omitted.

The second safety evaluation value may be used to represent the level of the collision risk between the target vehicle and the first obstacle corresponding to the second predicted driving information.

The way to obtain the second safety evaluation value may include: calculating to obtain the second safety evaluation value in the evaluation result corresponding to the second predicted driving information based on the safety evaluation formula, the second leader-follower relationship, and the second predicted driving information.

For example, performing, based on the safety evaluation formula, calculation on the second leader-follower relationship and the second predicted driving information to obtain the safety evaluation value between the target vehicle and the first obstacle corresponding to the second predicted driving information, may be expressed as:

$$R_c^- = S_R(P_{adc-P2}, P_{obs-P2}, V_{adc-P2}, V_{obs-P2}, H_{adc-P2}, H_{obs-P2}, O^-);$$

where $R_c^-$ represents the second safety evaluation value, $S_R$ () represents the safety evaluation formula, $P_{adc-P2}$ may represent the third predicted positions of the target vehicle at a plurality of prediction moments within the first time period in the second predicted driving information, $P_{obs-P2}$ represents the fourth predicted positions of the first obstacle at the plurality of prediction moments within the first time period in the second predicted driving information, $V_{adc-P2}$ may represent the third predicted velocities of the target vehicle at the plurality of prediction moments within the first time period in the second predicted driving information, $V_{obs-P2}$ represents the fourth predicted velocities of the first obstacle at the plurality of prediction moments within the first time period in the second predicted driving information, $H_{adc-P2}$ may represent the third predicted orientations of the target vehicle at the plurality of prediction moments within the first time period in the second predicted driving information, $H_{obs-P2}$ represents the fourth predicted orientations of the first obstacle at the plurality of prediction moments within the first time period in the second predicted driving information, and $O^-$ represents the second leader-follower relationship.

The second somatosensory evaluation value may be used to represent one's somatosensory experience in the target vehicle and the first obstacle during the interaction corresponding to the second predicted driving information.

The way to obtain the second somatosensory evaluation value may include: calculating to obtain the second somatosensory evaluation value in the evaluation result corresponding to the second predicted driving information based on the somatosensory evaluation formula, the second leader-follower relationship, and the second predicted driving information.

For example, performing, based on the somatosensory evaluation formula, calculation on the second leader-follower relationship and the second predicted driving information to obtain the somatosensory evaluation value during the interaction between the target vehicle and the first obstacle corresponding to the second predicted driving information, may be expressed as:

$$L_s^- = S_L(P_{adc-P2}, P_{obs-P2}, V_{adc-P2}, V_{obs-P2}, H_{adc-P2}, H_{obs-P2}, O^-);$$

where $L_s^-$ represents the second somatosensory evaluation value, and the meanings of the rest items are the same as in the previous example, and thus repeated description is omitted.

In this case, the determining, from the first predicted driving information and the second predicted driving information, the first optimal driving information based on an evaluation result corresponding to the second predicted driving information and the evaluation result corresponding to the first predicted driving information, may include: determining a first reference value corresponding to the first predicted driving information based on the evaluation result corresponding to the first predicted driving information; determining a second reference value corresponding to the second predicted driving information based on the evaluation result corresponding to the second predicted driving information; and selecting, from the first predicted driving information and the second predicted driving information, the first optimal driving information based on a maximum value in the first reference value and the second reference value.

Here, determining the first reference value corresponding to the first predicted driving information based on the evaluation result corresponding to the first predicted driving information may include: multiplying the first safety evaluation value in the evaluation result corresponding to the first predicted driving information by a first factor to obtain the first value, multiplying the first somatosensory evaluation value in the evaluation result corresponding to the first predicted driving information by a second factor to obtain the second value, and adding the first value and the second value together to obtain the first reference value corresponding to the first predicted driving information.

Determining the second reference value corresponding to the second predicted driving information based on the evaluation result corresponding to the second predicted driving information may include: multiplying the second safety evaluation value in the evaluation result corresponding to the second predicted driving information by the first factor to obtain the third value, multiplying the second somatosensory evaluation value in the evaluation result corresponding to the second predicted driving information by the second factor to obtain the fourth value, and adding the third value and the fourth value together to obtain the second reference value corresponding to the second predicted driving information.

The first factor and the second factor may be determined based on a balance factor. The balance factor may be configured according to the actual situation, and the value of the balance factor may be greater than 0 and less than 1. For example, if the balance factor is represented as $\gamma$, the value range of the balance factor is represented as $\gamma \in (0,1)$. The first factor may be equal to the balance factor (for example, the first factor is represented as $\gamma$), and the second factor may be equal to 1 minus the balance factor, for example, the second factor is represented as $(1-\gamma)$.

Selecting, from the first predicted driving information and the second predicted driving information, the first optimal driving information based on the maximum value among the first reference value and the second reference value may include: selecting the maximum reference value from the first reference value and the second reference value; and selecting, from the first predicted driving information and the second predicted driving information, the predicted driving information corresponding to the maximum reference value as the first optimal driving information.

In this example, since the first reference value is calculated by combining the first safety evaluation value and the first somatosensory evaluation value, the first reference value may be a value used to represent the comprehensive evaluated situation of the first predicted driving information. The magnitude of the first reference value is positively correlated with the quality of the comprehensive evaluated situation of the first predicted driving information.

Since the second reference value is calculated by combining the second safety evaluation value and the second somatosensory evaluation value, the second reference value may be a value used to represent the comprehensive evaluated situation of the second predicted driving information. The magnitude of the second reference value is positively correlated with the quality of the comprehensive evaluated situation of the second predicted driving information.

Furthermore, since the magnitudes of the first reference value and the second reference value are respectively positively correlated with the quality of the comprehensive evaluated situations of their corresponding predicted driving information, the predicted driving information corresponding to the maximum value among the first reference value and the second reference value has a relatively better comprehensive evaluated situation. Based on this, in this example, the predicted driving information with the best comprehensive evaluated situation may be selected as the first optimal driving information through the maximum value among the first reference value and the second reference value.

For example, selecting, from the first predicted driving information and the second predicted driving information, the first optimal driving information based on the maximum value among the first reference value and the second reference value may be expressed by the following formula:

$$\tau_{opt} = argmax_{\tau^+, \tau^-}(\gamma R_c^+ + (1-\gamma)L_s^+, \gamma R_c^- + (1-\gamma)L_s^-);$$

where $\tau_{opt}$ represents the predicted driving information corresponding to the maximum value, that is, the first optimal driving information; *argmax* () represents taking the maximum value; $\tau^+$ represents the first predicted driving information obtained based on the first leader-follower relationship; $\tau^-$ represents the second predicted driving information obtained based on the second leader-follower relationship; " $\gamma R_c^+ + (1-\gamma)L_s^+$ " may represent calculating the first reference value, and the meanings of the respective parameters in this formula are the same as those in the previous embodiment; "

$\gamma R_c^- + (1-\gamma)L_s^-$ " may represent calculating the second reference value, and the meanings of the respective parameters in this formula are also the same as those in the previous embodiment, and thus repeated descriptions are omitted.

For example, if the first predicted driving information is determined from the first predicted driving information and the second predicted driving information as the first optimal driving information, then the optimal predicted motion parameters of the target vehicle at the plurality of prediction moments within the first time period in the first optimal driving information is the first predicted motion parameters of the target vehicle at the plurality of prediction moments within the first time period, and the optimal predicted motion parameters of the first obstacle at a plurality of prediction moments within the first time period in the first optimal driving information are the second predicted motion parameters of the first obstacle at the plurality of prediction moments within the first time period. As another example, if the second predicted driving information is determined from the first predicted driving information and the second predicted driving information as the first optimal driving information, then the optimal predicted motion parameters of the target vehicle at the plurality of prediction moments within the first time period in the first optimal driving information is the third predicted motion parameters of the target vehicle at the plurality of prediction moments within the first time period, and the optimal predicted motion parameters of the first obstacle at a plurality of prediction moments within the first time period in the first optimal driving information are the fourth predicted motion parameters of the first obstacle at the plurality of prediction moment within the first time period.

Alternatively, the evaluation result corresponding to the first predicted driving information includes a first safety evaluation value; and the evaluation result corresponding to the second predicted driving information may include a second safety evaluation value. The descriptions of the first safety evaluation value and the second safety evaluation value are the same as those in the previous embodiment, and thus repeated description is omitted.

In this case, the determining, from the first predicted driving information and the second predicted driving information, the first optimal driving information based on an evaluation result corresponding to the second predicted driving information and the evaluation result corresponding to the first predicted driving information may include: determining the first reference value corresponding to the first predicted driving information based on the first safety evaluation value in the evaluation result corresponding to the first predicted driving information; determining the second reference value corresponding to the second predicted driving information based on the second safety evaluation value in the evaluation result corresponding to the second predicted driving information; selecting, from the first predicted driving information and the second predicted driving information, the first optimal driving information based on the maximum value among the first reference value and the second reference value.

Determining the first reference value corresponding to the first predicted driving information based on the first safety evaluation value in the evaluation result corresponding to the first predicted driving information may refer to using the first safety evaluation value in the evaluation result corresponding to the first predicted driving information as the first reference value corresponding to the first predicted driving information.

Determining the second reference value corresponding to the second predicted driving information based on the second safety evaluation value in the evaluation result corresponding to the second predicted driving information may refer to using the second safety evaluation value in the evaluation result corresponding to the second predicted driving information as the second reference value corresponding to the second predicted driving information.

Selecting, from the first predicted driving information and the second predicted driving information, the first optimal driving information based on the maximum value among the first reference value and the second reference value may include: selecting the maximum reference value from the first reference value and the second reference value; and selecting, from the first predicted driving information and the second predicted driving information, the predicted driving information corresponding to the maximum reference value as the first optimal driving information.

In this example, the first reference value is equal to the first safety evaluation value, so that the first reference value has the same meaning as the first safety evaluation value, both being a value used to represent the safety evaluation situation of the first predicted driving information. The magnitude of the first reference value is positively correlated with the quality of the evaluated safety situation of the first predicted driving information. The second reference value is equal to the second safety evaluation value, so that the second reference value has the same meaning as the second safety evaluation value, both being a value used to represent the evaluated safety situation of the second predicted driving information. The magnitude of the second reference value is positively correlated with the quality of the evaluated safety evaluation situation of the second predicted driving information.

Furthermore, since the magnitudes of the first reference value and the second reference value are respectively positively correlated with the quality of the evaluated safety situations of their corresponding predicted driving information, the predicted driving information corresponding to the maximum value among the first reference value and the second reference value has a relatively better evaluated safety situation. Based on this, in this example, the predicted driving information with the best evaluated safety situation may be selected as the first optimal driving information through the maximum value among the first reference value and the second reference value.

For example, selecting, from the first predicted driving information and the second predicted driving information, the first optimal driving information based on the maximum value among the first reference value and the second reference value may be expressed by the following formula:

$$\tau_{opt} = argmax_{\tau^+,\tau^-}(R_c^+, R_c^-);$$

where "$R_c^+$" may represent taking the first safety evaluation value as the first reference value, "$R_c^-$" may represent taking the second safety evaluation value as the second reference value, and the meanings of the rest items in the formula are the same as those in the previous embodiment, and thus repeated description is omitted.

Alternatively, the evaluation result corresponding to the first predicted driving information includes a first somatosensory evaluation value; and the evaluation result corresponding to the second predicted driving information may include a second somatosensory evaluation value. The descriptions of the first somatosensory evaluation value and the second somatosensory evaluation value are the same as those described in previous embodiment, and thus repeated description is omitted.

In this case, determining, from the first predicted driving information and the second predicted driving information, the first optimal driving information based on the evaluation result corresponding to the second predicted driving information and the evaluation result corresponding to the first predicted driving information may include: determining a first reference value corresponding to the first predicted driving information based on the first somatosensory evaluation value in the evaluation result corresponding to the first predicted driving information; determining a second reference value corresponding to the second predicted driving information based on the second somatosensory evaluation value in the evaluation result corresponding to the second predicted driving information; and selecting, from the first predicted driving information and the second predicted driving information, the first optimal driving information based on the maximum value of the first reference value and the second reference value.

Determining a first reference value corresponding to the first predicted driving information based on the first somatosensory evaluation value in the evaluation result corresponding to the first predicted driving information may refer to using the first somatosensory evaluation value in the evaluation result corresponding to the first predicted driving information as the first reference value corresponding to the first predicted driving information.

Determining a second reference value corresponding to the second predicted driving information based on the second somatosensory evaluation value in the evaluation result corresponding to the second predicted driving information may refer to using the second somatosensory evaluation value in the evaluation result corresponding to the second predicted driving information as the second reference value corresponding to the second predicted driving information.

Selecting, from the first predicted driving information and the second predicted driving information, the first optimal driving information based on the maximum value of the first reference value and the second reference value may include: selecting the maximum reference value from the first reference value and the second reference value; and selecting, from the first predicted driving information and the second predicted driving information, the predicted driving information corresponding to the maximum reference value as the first optimal driving information.

In this example, the first reference value is equal to the first somatosensory evaluation value. Therefore, the first reference value and the first somatosensory evaluation value have the same meaning, both being values used to represent the evaluated somatosensory situation of the first predicted driving information. The magnitude of the first reference value is positively correlated with the quality of the evaluated somatosensory situation of the first predicted driving information. The second reference value is equal to the second somatosensory evaluation value. Therefore, the second reference value and the second somatosensory evaluation value have the same meaning, both being values used to represent the evaluated somatosensory situation of the second predicted driving information. The magnitude of the second reference value is positively correlated with the quality of the evaluated somatosensory situation of the second predicted driving information.

Furthermore, since the magnitudes of the first reference value and the second reference value are respectively positively correlated with the quality of the evaluated somatosensory situations of their corresponding predicted driving information, the predicted driving information corresponding to the maximum value in the first reference value and the second reference value has a relatively better evaluated somatosensory situation among the two. Based on this, in the example, the predicted driving information with the best evaluated somatosensory situation can be selected as the first optimal driving information through the maximum value in the first reference value and the second reference value.

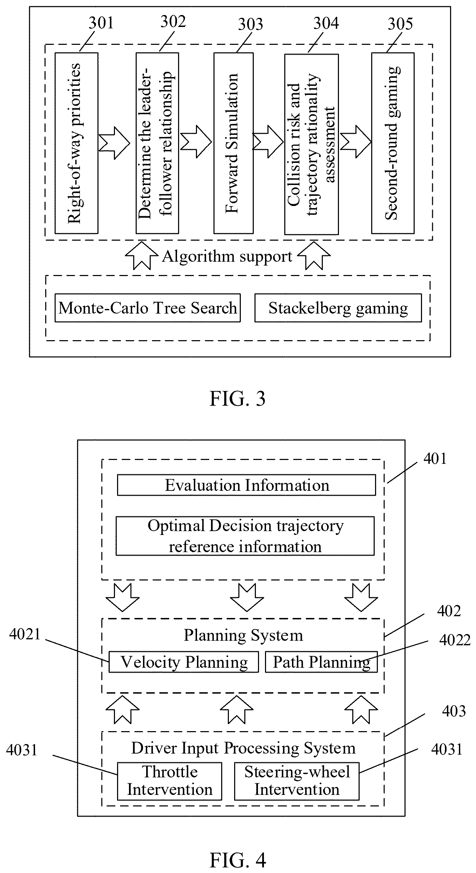

An exemplary explanation of the above-mentioned process of determining the first optimal driving information is provided in combination with Fig. 3:

First, the leader-follower relationship 302 is determined based on the right-of-way priorities 301 of the target vehicle and the first obstacle within the first time period, the initial predicted motion parameters of the target vehicle at a plurality of prediction moments within the first time period, and the initial predicted motion parameters of the first obstacle at the plurality of prediction moments within the first time period. Specifically, the first leader-follower relationship 302 between the target vehicle and the first obstacle is determined. For example, the leader-follower relationship $O^+$ between the target vehicle and the first obstacle within the first time period is determined and established according to the relative positions, velocities, and accelerations of the target vehicle and the first obstacle at a plurality of prediction moments within the first time period, the traffic flow type and the right-of-way priorities of the first obstacle.

Then, based on the existing kinematic model, in combination with forward-simulation methods such as Stackelberg gaming or Monte-Carlo tree search method, forward simulation 303 of yielding-overtaking interaction is carried out based on the first leader-follower relationship between the target vehicle and the first obstacle, the motion parameter of the target vehicle at the current moment, and the motion parameter of the first obstacle at the current moment, to obtain the first predicted driving information.

Next, a collision risk and trajectory rationality assessment 304 is carried out according to the first predicted driving information, that is, calculating the safety evaluation value (used to evaluate the collision risk between the two parties, $Rc^+$) and the somatosensory evaluation value (used to evaluate the somatosensory loss of overtaking or yielding, $Ls^+$) corresponding to the first predicted driving information. The detailed calculation methods are the same as those in the previous embodiment and will not be repeated.

If the evaluation result based on the first predicted driving information indicates that the collision risk and somatosensory loss between the two parties are high, and the risks borne by the ego-vehicle and the other vehicle for yielding or overtaking decisions are large, it proves that the current first predicted driving information is not reasonable enough, thus it may re-examine the first leader-follower relationship and make appropriate adjustments. Therefore, a second-round gaming 305 is further carried out. This second-round gaming may include: alternating the first leader-follower relationship to obtain the second leader-follower relationship, which enables the two parties to obtain more favorable decision-making conditions. This adjustment is not only a response based on risk assessment but also aims to achieve more efficient yielding-overtaking interaction and risk control in an uncertain traffic environment. Forward simulation is carried out again based on the second leader-follower relationship $O^-$ that is obtained by the swapping. Then, a collision risk and trajectory rationality assessment is carried out based on the second predicted driving information, that is, calculating the safety evaluation value (used to evaluate the collision risk between the two parties, $Rc^-$) and the somatosensory evaluation value (used to evaluate the somatosensory loss of overtaking or yielding, $Ls^-$) corresponding to the second predicted driving information. The specific calculation methods are the same as those in the previous embodiment and will not be repeated.

Finally, based on the evaluation results of the two predicted driving information obtained before and after the swap of the leader-follower relationship, the first optimal driving information is selected to ensure that the both parties may complete the yielding-overtaking interaction in a safe and comfortable manner.

In this way, somatosensory and/or safety evaluation is performed in combination with the first leader-follower relationship and the predicted motion parameters of the target vehicle and the first obstacle at each prediction moment included in the first predicted driving information, the comprehensiveness and timeliness of the evaluation of the first predicted driving information are ensured. Similarly, somatosensory and/or safety evaluation is performed in combination with the second leader-follower relationship and the predicted motion parameters of the target vehicle and the first obstacle at each prediction moment included in the second predicted driving information, the comprehensiveness and timeliness of the evaluation of the second predicted driving information are ensured.

Furthermore, the above-mentioned processes may determine the first optimal driving information among the two pieces of predicted driving information by combining the evaluation result of the first predicted driving information and the evaluation result of the second predicted driving information. Since the two pieces of predicted driving information are determined based on two leader-follower relationships respectively, the most comprehensive evaluation results may be provided for various possible predicted driving information of the traffic participants, thereby ensuring the accuracy of the finally determined first optimal driving information.

By adopting the solution provided in the above-mentioned embodiments, through the first condition that can be used to measure whether the predicted driving information meets the safety requirements and/or somatosensory requirements, the first predicted driving information corresponding to the first leader-follower relationship may be evaluated. Then, on basis of the evaluation result, whether to further alternate the leader-follower relationship is determined and then the first optimal driving information is determined, or the first predicted driving information is directly used as the first optimal driving information. This can not only ensure the accuracy of the evaluation of the predicted driving information but also ensure the safety and/or somatosensory experience of the finally obtained first optimal driving information.

In some alternative implementations, the determining the first optimal driving information based on the evaluation result corresponding to the first predicted driving information includes: alternating the first leader-follower relationship to obtain the second leader-follower relationship between the target vehicle and the first obstacle; obtaining the second predicted driving information based on the second leader-follower relationship; determining, from the first predicted driving information and the second predicted driving information, the first optimal driving information based on the evaluation result corresponding to the second predicted driving information and the evaluation result corresponding to the first predicted driving information.

The detailed descriptions of "alternating the first leader-follower relationship to obtain the second leader-follower relationship between the target vehicle and the first obstacle; obtaining the second predicted driving information based on the second leader-follower relationship; and determining, from the first predicted driving information and the second predicted driving information, the first optimal driving information based on the evaluation result corresponding to the second predicted driving information and the evaluation result corresponding to the first predicted driving information" involved in this implementation are the same as those in the previous implementations, so repeated description is omitted.

The difference between this implementation and the previous one is that before alternating the first leader-follower relationship, in this implementation it is not necessary to pre-evaluate whether the evaluation result corresponding to the first predicted driving information meets the first condition. Instead, after obtaining the first predicted driving information under the first leader-follower relationship, the first leader-follower relationship is directly alternated to obtain the second leader-follower relationship, and then after obtaining the two predicted driving information under the two leader-follower relationships, the first optimal driving information is selected based on the evaluation results of the first and second predicted driving information.

The solution provided by this implementation may skip the processing of judging whether the first condition is met, directly evaluate the first and second predicted driving information under the two leader-follower relationships to select the first optimal driving information, thereby ensuring the accuracy of the evaluation of the predicted driving information, and ensuring the safety and somatosensory experience of the finally obtained first optimal driving information.

In some alternative implementations, after determining the first optimal driving information based on the evaluation result corresponding to the first predicted driving information, it may also include: generating a decision instruction based on the first optimal driving information and the evaluation result corresponding to the first optimal driving information, where the decision instruction is used to control the target vehicle to perform yielding or overtaking processing.

Specifically, the decision instruction may include: the velocity planning result of the target vehicle at each prediction moment among the plurality of prediction moments within the first time period, and the path planning result of the target vehicle within the first time period. The path planning result of the target vehicle within the first time period may include at least one of the position, or orientation, etc. of the target vehicle at each prediction moment among the plurality of prediction moments within the first time period.

For the target vehicle, the number of all obstacles within a designated range of the target vehicle may be one or more.

In an example, for the target vehicle, the number of all obstacles within the designated range of the target vehicle may be one, that is, there is only the first obstacle within the designated range of the target vehicle.

In this example, generating a decision instruction based on the first optimal driving information and the evaluation result corresponding to the first optimal driving information may include: generating a decision instruction based on the optimal motion parameters of the first obstacle at a plurality of prediction moments within the first time period included in the first optimal driving information, the optimal motion parameters of the target vehicle at a plurality of prediction moments within the first time period in the first optimal driving information, and the evaluation result corresponding to the first optimal driving information.

The process of "generating a decision instruction based on the optimal motion parameters of the first obstacle at a plurality of prediction moments within the first time period included in the first optimal driving information, the optimal motion parameters of the target vehicle at a plurality of prediction moments within the first time period in the first optimal driving information, and the evaluation result corresponding to the first optimal driving information" may be executed based on a preset strategy or by a decision-making model, which is not limited in the embodiment.

For example, generating a decision instruction based on the optimal motion parameters of the first obstacle at a plurality of prediction moments within the first time period included in the first optimal driving information and the optimal motion parameters of the target vehicle at a plurality of prediction moments within the first time period included in the first optimal driving information may include: judging whether there is an intersection area between the target vehicle and the first obstacle based on the optimal motion parameters of the first obstacle at a plurality of prediction moments within the first time period included in the first optimal driving information and the optimal motion parameters of the target vehicle at a plurality of prediction moments within the first time period included in the first optimal driving information; if it is determined that there is an intersection area, judging whether the predicted behavior of the target vehicle is overtaking or yielding based on the optimal motion parameters of the first obstacle at a plurality of prediction moments within the first time period included in the first optimal driving information and the optimal motion parameters of the target vehicle at a plurality of prediction moments within the first time period included in the first optimal driving information; if the predicted behavior of the target vehicle is overtaking, judging, based on the evaluation result corresponding to the first optimal driving information, whether the safety evaluation value between the target vehicle and the first obstacle is higher than the safety threshold; if the safety evaluation value between the target vehicle and the first obstacle is higher than the safety threshold, generating a decision instruction for controlling the target vehicle to perform overtaking processing. Here, that the safety evaluation value is higher than the safety threshold may indicate that the collision risk between the target vehicle and the first obstacle is low, that is, the target vehicle may safely pass through the intersection area.

For example, this decision instruction may include an instruction for controlling the target vehicle to perform overtaking relative to the first obstacle, the velocity planning result of the target vehicle at each prediction moment among the plurality of prediction moments within the first time period, and the path planning result of the target vehicle within the first time period; or this decision instruction may only include the velocity planning result of the target vehicle at each prediction moment among the plurality of prediction moments within the first time period and the path planning result of the target vehicle within the first time period, so that the target vehicle may achieve overtaking by executing this decision instruction.

As an example, generating a decision instruction based on the optimal motion parameters of the first obstacle at a plurality of prediction moments within the first time period included in the first optimal driving information and the optimal motion parameters of the target vehicle at a plurality of prediction moments within the first time period included in the first optimal driving information may include: judging whether there is an intersection area between the target vehicle and the first obstacle based on the optimal motion parameters of the first obstacle at a plurality of prediction moments within the first time period included in the first optimal driving information and the optimal motion parameters of the target vehicle at a plurality of prediction moments within the first time period included in the first optimal driving information; if it is determined that there is an intersection area, judging whether the predicted behavior of the target vehicle is overtaking or yielding based on the optimal motion parameters of the first obstacle at a plurality of prediction moments within the first time period included in the first optimal driving information and the optimal motion parameters of the target vehicle at a plurality of prediction moments within the first time period included in the first optimal driving information; if the predicted behavior of the target vehicle is overtaking, judging, based on the evaluation result corresponding to the first optimal driving information, whether the safety evaluation value between the target vehicle and the first obstacle is higher than the safety threshold; if the safety evaluation value between the target vehicle and the first obstacle is not higher than the safety threshold, generating a decision instruction for controlling the target vehicle to perform yielding processing. Here, that the safety evaluation value is not higher than the safety threshold may indicate that the collision risk between the target vehicle and the first obstacle is high, that is, the target vehicle may not be able to safely pass through the intersection area based on the predicted motion parameters.

For example, this decision instruction may include an instruction for controlling the target vehicle to perform yielding processing relative to the first obstacle, the velocity planning result of the target vehicle at each prediction moment among the plurality of prediction moments within the first time period, and the path planning result of the target vehicle within the first time period; or this decision instruction may only include the velocity planning result of the target vehicle at each prediction moment among the plurality of prediction moments within the first time period and the path planning result of the target vehicle within the first time period, so that the target vehicle may achieve yielding by executing this decision instruction.

For example, generating a decision instruction based on the optimal motion parameters of the first obstacle at a plurality of prediction moments within the first time period included in the first optimal driving information and the optimal motion parameters of the target vehicle at a plurality of prediction moments within the first time period included in the first optimal driving information may include: judging whether there is an intersection area between the target vehicle and the first obstacle based on the optimal motion parameters of the first obstacle at a plurality of prediction moments within the first time period included in the first optimal driving information and the optimal motion parameters of the target vehicle at a plurality of prediction moments within the first time period included in the first optimal driving information; if it is determined that there is an intersection area, judging whether the predicted behavior of the target vehicle is overtaking or yielding based on the optimal motion parameters of the first obstacle at a plurality of prediction moments within the first time period included in the first optimal driving information and the optimal motion parameters of the target vehicle at a plurality of prediction moments within the first time period included in the first optimal driving information; if the predicted behavior of the target vehicle is yielding, judging whether the safety evaluation value between the target vehicle and the first obstacle is higher than the safety threshold based on the evaluation result corresponding to the first optimal driving information; if the safety evaluation value between the target vehicle and the first obstacle is higher than the safety threshold, generating a decision instruction for controlling the target vehicle to perform yielding processing.

It should be noted that the above are also only exemplary explanations. In actual processing, other decision-making manners may be used or a pre-trained decision-making model may be used to perform the above-mentioned processing. The specific manners for generating the decision instruction is not limited or exhausted here.

In an example, for the target vehicle, the number of all obstacles within a designated range of the target vehicle may be multiple, that is, there are a plurality of obstacles within the designated range of the target vehicle, and the first obstacle is any one of the plurality of obstacles.

In this type of example, generating a decision instruction based on the first optimal driving information and the evaluation result corresponding to the first optimal driving information may include: generating a decision instruction based on the optimal motion parameters of an obstacle at a plurality of prediction moments within the first time period included in each of a plurality pieces of optimal driving information, the optimal motion parameters of the target vehicle at a plurality of prediction moments within the first time period included in each of the plurality pieces of optimal driving information, and the evaluation result corresponding to each of the plurality pieces of optimal driving information, where the plurality pieces of optimal driving information includes the first optimal driving information, and different optimal driving trajectories correspond to different obstacles.

Taking the number of all obstacles within the designated range of the target vehicle is 3 as an example, the 3 obstacles include the first obstacle, the second obstacle, and the third obstacle. Processing for the target vehicle and the first obstacle using the above-mentioned implementation may obtain the first optimal driving information, which will not be repeated here. Processing for the target vehicle and the second obstacle using the same implementation may obtain the second optimal driving information, which may include the optimal motion parameters of the second obstacle at a plurality of prediction moments within the first time period and the optimal motion parameters of the target vehicle at a plurality of prediction moments within the first time period. Processing for the target vehicle and the third obstacle using the same implementation may obtain the third optimal driving information, which may include the optimal motion parameters of the third obstacle at a plurality of prediction moments within the first time period and the optimal motion parameters of the target vehicle at a plurality of prediction moments within the first time period.

The above three pieces of optimal driving information (i.e., the first optimal driving information, the second optimal driving information, and the third optimal driving information) each includes the optimal motion parameters of the target vehicle at a plurality of prediction moments within the first time period, but the optimal motion parameters of the target vehicle at a plurality of prediction moments within the first time period included in the three pieces of optimal driving information may be the same or different, due to that the above-mentioned processing is performed for the target vehicle and each of the corresponding obstacles respectively to generate the optimal driving information of the target vehicle and each of the corresponding obstacles. Therefore, it may be necessary to further analyze and generate a decision instruction by combining the respective contents included in each optimal driving information.

For example, generating a decision instruction based on the optimal motion parameters of the obstacle at a plurality of prediction moments within the first time period included in each of the plurality pieces of optimal driving information, the optimal motion parameters of the target vehicle at a plurality of prediction moments within the first time period included in each of the plurality pieces of optimal driving information, and the evaluation result corresponding to each of the plurality pieces of optimal driving information may include: determining the optimal predicted position of each obstacle at each prediction moment based on the optimal motion parameters of an obstacle at a plurality of prediction moments within the first time period included in each of the plurality pieces of optimal driving information; perpendicularly projecting the optimal predicted position of each obstacle at each prediction moment onto the path of the target vehicle within the first time period, to obtain one or more projection points of each obstacle falling into the path of the target vehicle within the first time period; determining the predicted cut-in moment of each obstacle cutting into the path of the target vehicle, based on one or more projection points of each obstacle falling into the path of the target vehicle within the first time period; calculating the time difference between the predicted cut-in moment of each obstacle cutting into the path of the target vehicle and the current moment; generating a decision instruction based on the time difference corresponding to each obstacle, the optimal motion parameters of the target vehicle at a plurality of prediction moments within the first time period included in each optimal driving information, and the evaluation result corresponding to each optimal driving information.

Here, the determining the predicted cut-in moment of each obstacle cutting into the path of the target vehicle based on one or more projection points of each obstacle falling into the path of the target vehicle within the first time period may include: determining the prediction moment corresponding to each projection point of the one or more projection points of an obstacle falling into the path of the target vehicle within the first time period, and using the earliest prediction moment among the prediction moments corresponding to the projection points of the obstacle falling into the path of the target vehicle within the first time period as the predicted cut-in moment of the obstacle cutting into the path of the target vehicle.

Alternatively, generating a decision instruction based on the time difference corresponding to each obstacle, the optimal motion parameters of the target vehicle at a plurality of prediction moments within the first time period included in each optimal driving information, and the evaluation result corresponding to each optimal driving information may include: if among the plurality of obstacles there is a target obstacle the time difference corresponding thereto is less than a time-difference threshold, ascertaining the target optimal driving information that includes the target obstacle; determining the yielding-or-overtaking relationship between the target obstacle and the target vehicle based on the evaluation result corresponding to the target optimal driving information, the optimal motion parameters of the target obstacle at a plurality of prediction moments within the first time period included in the target optimal driving information, and the optimal motion parameters of the target vehicle at a plurality of prediction moments within the first time period; and generating the decision instruction based on: the yielding-or-overtaking relationship between the target obstacle and the target vehicle, and the optimal motion parameters of other obstacles except the target obstacle at a plurality of prediction moments within the first time period.

For example, generating a decision instruction based on: the yielding-or-overtaking relationship between the target obstacle and the target vehicle, and the optimal motion parameters of other obstacles except the target obstacle at a plurality of prediction moments within the first time period may include: if the yielding-or-overtaking relationship between the target obstacle and the target vehicle is that the target vehicle overtakes the target obstacle, adjusting the optimal motion parameters of the target obstacle at one or more moments to be adjusted (which are after the predicted cut-in moment) among the plurality of prediction moments within the first time period, to obtain the adjusted driving information of the target obstacle; and generating the decision instruction based on the adjusted driving information of the target obstacle and the optimal motion parameters of other obstacles except the target obstacle at a plurality of prediction moments within the first time period.

Adjusting the optimal motion parameters of the target obstacle at one or more moments to be adjusted (which are after the predicted cut-in moment) among the plurality of prediction moments within the first time period, to obtain the adjusted driving information of the target obstacle may include: using the prediction moments within the first time period which are after the predicted cut-in moment and including the predicted cut-in moment as moments to be adjusted, delaying each of the moments to be adjusted by the first time period to obtain adjusted moments respectively corresponding to the moments to be adjusted; using the optimal motion parameter at each moment to be adjusted as the optimal motion parameter at an adjusted moment corresponding to the each moment to be adjusted; and using the optimal motion parameter of the target obstacle at each adjusted moment within the first time period as the adjusted driving information of the target obstacle. Here, the first time period may be greater than or equal to the time-difference threshold. It should also be noted that if an adjusted moment exceeds the range of the first time period, this adjusted moment may be deleted.

Generating a decision instruction based on the adjusted driving information of the target obstacle and the optimal motion parameters of other obstacles except the target obstacle at a plurality of prediction moments within the first time period may include: determining a yielding-or-overtaking relationship between the target vehicle and another obstacle based on the optimal motion parameters of the another obstacle except the target obstacle at a plurality of prediction moments within the first time period, and generating the decision instruction based on the adjusted driving information of the target obstacle and the yielding-or-overtaking relationship between the target vehicle and the another obstacle. The specific processing method for generating the decision instruction based on the adjusted driving information of the target obstacle and the yielding-or-overtaking relationship between the target vehicle and another obstacle is not limited in this embodiment. For example, the decision instruction may include an instruction for controlling the target vehicle to perform an overtaking operation relative to the target obstacle, an instruction for controlling the target vehicle to perform a yielding operation or an overtaking operation relative to each another obstacle, the velocity planning result of the target vehicle at each prediction moment among the plurality of prediction moments within the first time period, and the path planning result of the target vehicle within the first time period; or the decision instruction may only include the velocity planning result of the target vehicle at each prediction moment among the plurality of prediction moments within the first time period and the path planning result of the target vehicle within the first time period, so that the target vehicle can perform, by executing this decision instruction, an overtaking operation relative to the target obstacle and a yielding operation or an overtaking operation relative to each another obstacle.

For example, generating a decision instruction based on the yielding-or-overtaking relationship between the target obstacle and the target vehicle, and the optimal motion parameters of other obstacles except the target obstacle at a plurality of prediction moments within the first time period may include: if the yielding-or-overtaking relationship between the target obstacle and the target vehicle is that the target vehicle yields to the target obstacle, generating a decision instruction based on the optimal motion parameters of the target obstacle at a plurality of prediction moments within the first time period and the optimal motion parameters of the other obstacles except the target obstacle at a plurality of prediction moments within the first time period. In this case, the specific processing method for generating the decision instruction based on the optimal motion parameters of the target obstacle at a plurality of prediction moments within the first time period and the optimal motion parameters of the other obstacles except the target obstacle at a plurality of prediction moments within the first time period is not limited in this embodiment. For example, the decision instruction may include an instruction for controlling the target vehicle to perform a yielding operation relative to the target obstacle, an instruction for controlling the target vehicle to perform a yielding operation or an overtaking operation relative to each another obstacle, the velocity planning result of the target vehicle at each prediction moment among the plurality of prediction moments within the first time period, and the path planning result of the target vehicle within the first time period; or the decision instruction may only include the velocity planning result of the target vehicle at each prediction moment among the plurality of prediction moments within the first time period and the path planning result of the target vehicle within the first time period, so that the target vehicle can perform, by executing this decision instruction, a yielding operation relative to the target obstacle and a yielding operation or an overtaking operation relative to each another obstacle.

Alternatively, generating a decision instruction based on the time difference corresponding to each obstacle, the optimal motion parameters of the target vehicle at a plurality of prediction moments within the first time period included in each optimal driving information, and the evaluation result corresponding to each optimal driving information may include: among the plurality of obstacles if there is no target obstacle with a time difference less than the time-difference threshold, determining a yielding-or-overtaking relationship between each obstacle and the target vehicle based on the evaluation result corresponding to each optimal driving information, the optimal motion parameters of an obstacle at a plurality of prediction moments within the first time period included in each piece of optimal driving information, and the optimal motion parameters of the target vehicle at a plurality of prediction moments within the first time period; and generating a decision instruction based on the yielding-or-overtaking relationship between each obstacle and the target vehicle. For example, the decision instruction may include an instruction for controlling the target vehicle to perform a yielding operation or an overtaking operation relative to each obstacle among the different obstacles, the velocity planning result of the target vehicle at each prediction moment among the plurality of prediction moments within the first time period, and the path planning result of the target vehicle within the first time period; or the decision instruction may only include the velocity planning result of the target vehicle at each prediction moment among the plurality of prediction moments within the first time period and the path planning result of the target vehicle within the first time period, so that the target vehicle can perform, by executing this decision instruction, a yielding operation or an overtaking operation relative to each obstacle among the different obstacles.

It should be noted that the above is only for exemplary illustration. In actual processing, the processing may be carried out based on a preset strategy or a decision-making model to finally obtain the decision instruction, which is not limited or exhaustively listed herein.

An exemplary explanation for the process of determining the decision instruction is provided in combination with Fig. 4.

First, the planning system 402 acquires the input information 401, the input information may include evaluation information (i.e., the evaluation result corresponding to the first optimal driving information) and the decided optimal trajectory reference information (i.e., the first optimal driving information).

Then, the planning system processes the input information 401 to finally obtain a decision instruction, and the decision instruction may include a velocity-planning result 4021 and a path-planning result 4022. It should be noted that in order to achieve efficient transmission of the evaluation and decision-making information, the interface between the decision-making module and the planning system in the electronic device may need to be opened, to ensure that the planning system may perform yielding or overtaking according to the instructions of the decision-making module. For example, when it is decided to overtake, the overtaking cost of the planning system may be reduced to ensure that the underlying logic may plan an overtaking trajectory as much as possible. If it is decided to yield, the corresponding deceleration cost may be increased through the public interface to prevent the ego-vehicle from accelerating.

Finally, the driver of the target vehicle may also intervene in the planning system 402 through the driver input processing system 403. For example, in the case of a decision to overtake, if the acceleration is not timely performed, the driver may perform throttle intervention 4031, such as gently stepping on the accelerator pedal to help the vehicle speed up. If the steering is not timely performed, the driver may perform steering-wheel intervention 4032 to adjust the driving direction of the target vehicle in a timely manner, etc. In this way, both the safety and efficiency of driving are ensured, and the user's riding experience is also taken into account.

By adopting the above-mentioned solution, in combination with the currently determined optimal driving information and its corresponding evaluation result, a decision may be generated and executed to control the target vehicle to yield or overtake. Since the optimal driving information is selected by evaluating the predicted behaviors of a plurality of traffic participants, the accuracy of the finally generated decision instruction may be ensured, and thus the safety of the target vehicle performing corresponding processing based on the decision instruction may be guaranteed.

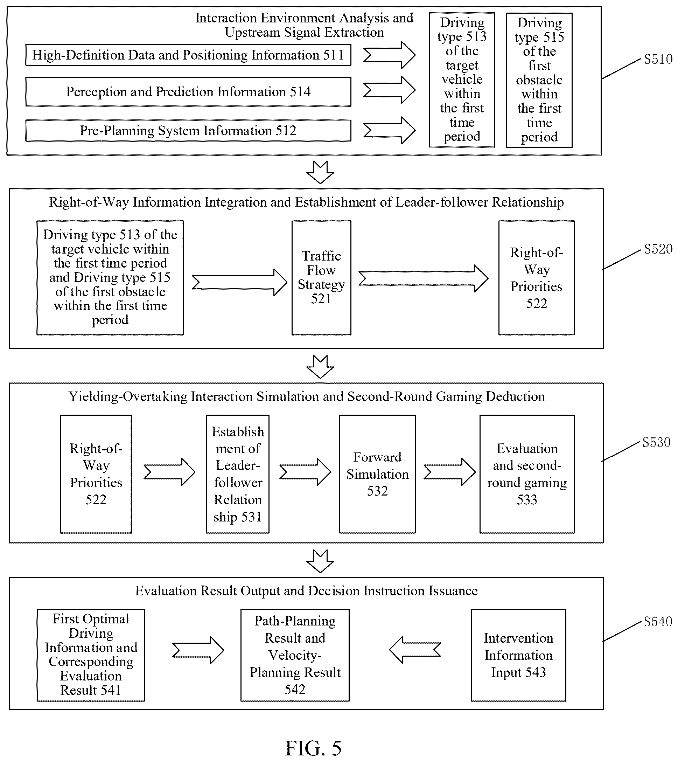

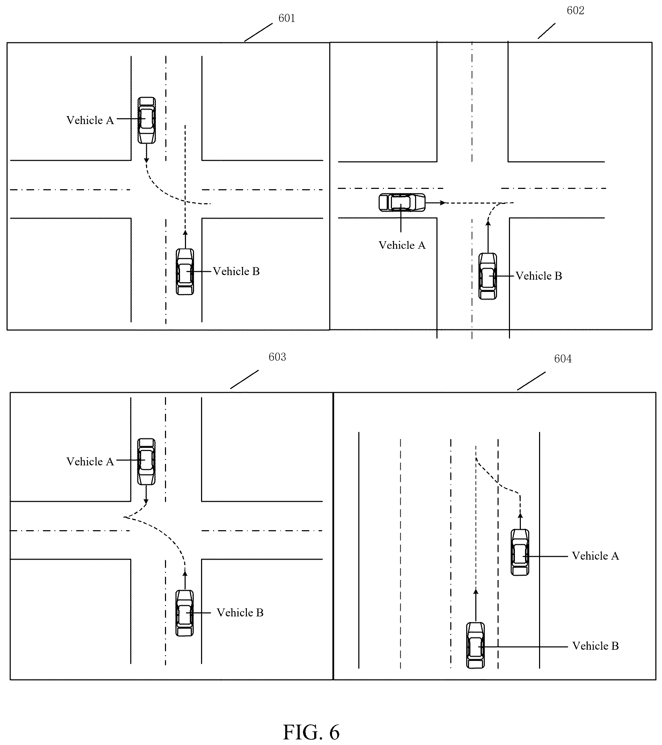

An exemplary explanation of the driving information prediction method provided in embodiments of the present disclosure is given in combination with Fig. 5 and Fig. 6.

S510, Interactive environment analysis and upstream signal extraction.

As specifically shown in Fig. 5, this step may include: determining the motion parameter of the target vehicle at the current moment by combining the high-definition data and positioning information 511, and determining the path information of the target vehicle within the first time period according to the pre-planning system information 512; and obtaining the driving type 513 of the target vehicle within the first time period based on the motion parameter of the target vehicle at the current moment and the path information of the target vehicle within the first time period. Using the perception and prediction information 514 to determine the motion parameter of the first obstacle at the current moment and the predicted path information of the first obstacle within the first time period in the future, and obtaining the driving type 515 of the first obstacle within the first time period based on the motion parameter of the first obstacle at the current moment and the predicted path information of the first obstacle within the first time period. In this way, the intentions of the target vehicle and the first obstacle and potential risks may be preliminarily understood. By integrating these information, the system may build a relatively comprehensive environmental model, laying a solid foundation for subsequent yielding-overtaking interaction simulation, collision risk and trajectory rationality assessment.

Referring to Fig. 6, several possible intersection scenarios among traffic participants are shown in Fig. 6. Vehicle A in Fig. 6 represents the first obstacle, and Vehicle B represents the target vehicle. The arrow on each vehicle indicates the driving direction of the vehicle, and the dotted line extended from the arrow may represent the driving path or predicted positions within the first time period. In scenario 601 in Fig. 6, the driving type of Vehicle B may be going straight, and the driving type of Vehicle A is turning left. In scenario 602 in Fig. 6, the driving type of Vehicle B may be turning right, and the driving type of Vehicle A is going straight. In scenario 603 in Fig. 6, the driving type of Vehicle B may be turning left, and the driving type of Vehicle A is turning right. In scenario 604 in Fig. 6, the driving type of Vehicle B may be going straight, and the driving type of Vehicle A is changing lanes.

S520, Right-of-way information integration and leader-follower relationship determination.

As specifically shown in Fig. 5, this step may include: obtaining the right-of-way priorities 522 of the target vehicle and the first obstacle based on the driving type 513 of the target vehicle within the first time period, the driving type 515 of the first obstacle within the first time period, and the traffic flow strategy 521 (the traffic flow strategy is the traffic flow type of the first obstacle).

S530, Yielding-overtaking interaction simulation and second-round gaming deduction.

As specifically shown in Fig. 5, this step may include: ascertaining and establishing the leader-follower relationship 531, that is, obtaining the first leader-follower relationship, based on the right-of-way priorities 522 of the target vehicle and the first obstacle; performing forward simulation 532 based on the first leader-follower relationship to obtain the first predicted driving information, for example, possible collision risks and trajectory changes may be predicted through the forward simulation, and through iterative calculation, the optimal driving trajectory, that is, the first predicted driving information, is determined; evaluating the first predicted driving information and performing a second-round gaming 533, for example, the evaluation result of the first predicted driving information is obtained by performing evaluation on the first predicted driving information, then according to the evaluation result, whether to swap the leader-follower relationship and perform a second-round gaming is decided, and finally, the first optimal driving information is obtained, thereby improving the evaluation stability and decision-making reliability of the ego-vehicle in an uncertain environment.

Taking scenario 601 shown in Fig. 6 as an example, the right-of-way priority of Vehicle B is higher than that of Vehicle A. However, by combining the initial predicted motion parameters of Vehicle A and Vehicle B, it is found that Vehicle A will reach the predicted intersection position (i.e., the intersection of the driving paths (the two dotted lines) of Vehicle A and Vehicle B within the first time period in 601 of Fig. 6) earlier than Vehicle B. Then, in the finally determined first leader-follower relationship, Vehicle A is in a leader position and Vehicle B is in a follower position. The exemplary explanations of other scenarios in Fig. 6 are similar to that of scenario 601 and will not be elaborated one by one.

S540, Evaluation result output and decision instruction issuance.

As specifically shown in Fig. 5, this step may include: performing planning processing according to the first optimal driving information and its corresponding evaluation result 541 obtained from the evaluation and the second-round gaming 533, to obtain the path-planning result and velocity-planning result 542; In addition, the driver may also intervene in this process and input intervention information 543 to the path-planning result and velocity-planning result, such as throttle intervention or steering-wheel intervention. It should be understood that in this process, the information transmitted is not only the simple yielding-overtaking result and collision probability, but more importantly, the signals that the planning system may understand and utilize. In order to achieve this goal, the decision-making and evaluation system may need to be fully adapted to the planning module. Information transmission may need to use exclusive interfaces and follow specific formats and protocols to ensure the integrity and timeliness of the data, thereby ensuring the efficient cooperation between the decision-making and planning systems.

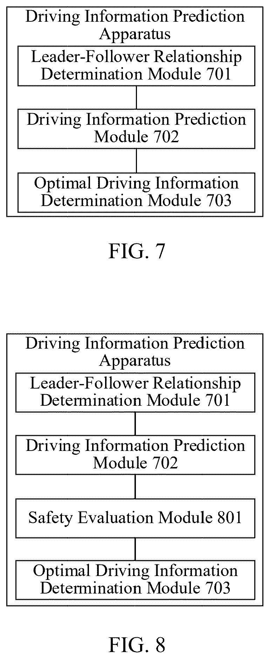

Fig. 7 shows a schematic block diagram of a driving information prediction apparatus provided in an embodiment of the present disclosure. As shown in Fig. 7, the driving information prediction apparatus includes: a leader-follower relationship determination module 701, configured to determine a first leader-follower relationship between a target vehicle and a first obstacle based on motion parameter of the target vehicle at a current moment, path information of the target vehicle within a first time period, motion parameter of the first obstacle at the current moment, and predicted path information of the first obstacle within the first time period; a driving information prediction module 702, configured to obtain first predicted driving information based on the first leader-follower relationship, where the first predicted driving information comprises: first predicted motion parameters of the target vehicle at a plurality of prediction moments within the first time period, and second predicted motion parameters of the first obstacle at the plurality of prediction moments within the first time period; an optimal driving information determination module 703, configured to determine first optimal driving information based on an evaluation result corresponding to the first predicted driving information, where the first optimal driving information comprises: optimal predicted motion parameters of the target vehicle at the plurality of prediction moments within the first time period, and optimal predicted motion parameters of the first obstacle at the plurality of prediction moments within the first time period.

The driving information prediction module is configured to perform one of the following: in response to the evaluation result corresponding to the first predicted driving information satisfying a first condition, using the first predicted driving information as the first optimal driving information; and in response to the evaluation result corresponding to the first predicted driving information not satisfying the first condition, alternating the first leader-follower relationship to obtain a second leader-follower relationship between the target vehicle and the first obstacle, obtaining second predicted driving information based on the second leader-follower relationship, and determining the first optimal driving information from the first predicted driving information and the second predicted driving information based on an evaluation result corresponding to the second predicted driving information and the evaluation result corresponding to the first predicted driving information.

The first condition includes at least one of: a first safety evaluation value in the evaluation result corresponding to the first predicted driving information is higher than a safety threshold, or a first somatosensory evaluation value in the evaluation result corresponding to the first predicted driving information is higher than a somatosensory evaluation threshold.

The optimal driving information determination module is configured to: alternate the first leader-follower relationship to obtain a second leader-follower relationship between the target vehicle and the first obstacle; obtain second predicted driving information based on the second leader-follower relationship; and determine the first optimal driving information from the first predicted driving information and the second predicted driving information based on an evaluation result corresponding to the second predicted driving information and the evaluation result corresponding to the first predicted driving information.

The second predicted driving information includes: third predicted motion parameters of the target vehicle at the plurality of prediction moments within the first time period, and fourth predicted motion parameters of the first obstacle at the plurality of prediction moments within the first time period.

As shown in Fig. 8, the apparatus further includes a safety evaluation module 801. The safety evaluation module is configured to perform at least one of: calculating to obtain a first safety evaluation value in the evaluation result corresponding to the first predicted driving information based on a safety evaluation formula, the first leader-follower relationship and the first predicted driving information; calculating to obtain a first somatosensory evaluation value in the evaluation result corresponding to the first predicted driving information based on a somatosensory evaluation formula, the first leader-follower relationship and the first predicted driving information; calculating to obtain a second safety evaluation value in the evaluation result corresponding to the second predicted driving information based on the safety evaluation formula, the second leader-follower relationship and the second predicted driving information; or calculating to obtain a second somatosensory evaluation value in the evaluation result corresponding to the second predicted driving information based on the somatosensory evaluation formula, the second leader-follower relationship, and the second predicted driving information.

The optimal driving information determination module is configured to determine a first reference value corresponding to the first predicted driving information based on the evaluation result corresponding to the first predicted driving information; determine a second reference value corresponding to the second predicted driving information based on the evaluation result corresponding to the second predicted driving information; and select, from the first predicted driving information and the second predicted driving information, the first optimal driving information based on a maximum value in the first reference value and the second reference value.

The driving information prediction module is configured to: perform forward simulation based on the first leader-follower relationship, the motion parameter of the target vehicle at the current moment, and the motion parameter of the first obstacle at the current moment, to obtain the first predicted motion parameters of the target vehicle at the plurality of prediction moments within the first time period and the second predicted motion parameters of the first obstacle at the plurality of prediction moments within the first time period; and use the first predicted motion parameters of the target vehicle at the plurality of prediction moments within the first time period and the second predicted motion parameters of the first obstacle at the plurality of prediction moments within the first time period as the first predicted driving information.

The driving information prediction module is configured to: perform forward simulation based on the second leader-follower relationship, the motion parameter of the target vehicle at the current moment, and the motion parameter of the first obstacle at the current moment, to obtain third predicted motion parameters of the target vehicle at the plurality of prediction moments within the first time period and fourth predicted motion parameters of the first obstacle at the plurality of prediction moments within the first time period; and use the third predicted motion parameters of the target vehicle at the plurality of prediction moments within the first time period and the fourth predicted motion parameters of the first obstacle at the plurality of prediction moments within the first time period as the second predicted driving information.

The leader-follower relationship determination module is configured to: determine right-of-way priorities of the target vehicle and the first obstacle within the first time period based on the motion parameter of the target vehicle at the current moment, the path information of the target vehicle within the first time period, the motion parameter of the first obstacle at the current moment, and the predicted path information of the first obstacle within the first time period; and determine the first leader-follower relationship between the target vehicle and the first obstacle based on the right-of-way priorities of the target vehicle and the first obstacle within the first time period.

The leader-follower relationship determination module is configured to: obtain a driving type of the target vehicle within the first time period based on the motion parameter of the target vehicle at the current moment and the path information of the target vehicle within the first time period; obtain a driving type of the first obstacle within the first time period based on the motion parameter of the first obstacle at the current moment and the predicted path information of the first obstacle within the first time period; and obtain the right-of-way priorities of the target vehicle and the first obstacle within the first time period based on the driving type of the target vehicle within the first time period and the driving type of the first obstacle within the first time period.

The leader-follower relationship determination module is configured to: determine a predicted intersection area based on initial predicted motion parameters of the target vehicle at the plurality of prediction moments within the first time period and initial predicted motion parameters of the first obstacle at the plurality of prediction moments within the first time period; and determine the first leader-follower relationship between the target vehicle and the first obstacle based on the right-of-way priorities of the target vehicle and the first obstacle within the first time period, the predicted intersection area and reference information, where the reference information comprises at least one of: a driving type of the target vehicle, a driving type of the first obstacle, the motion parameter of the target vehicle at the current moment, the motion parameter of the first obstacle at the current moment, the initial predicted motion parameters of the target vehicle at the plurality of prediction moments within the first time period, or the initial predicted motion parameters of the first obstacle at the plurality of prediction moments within the first time period.

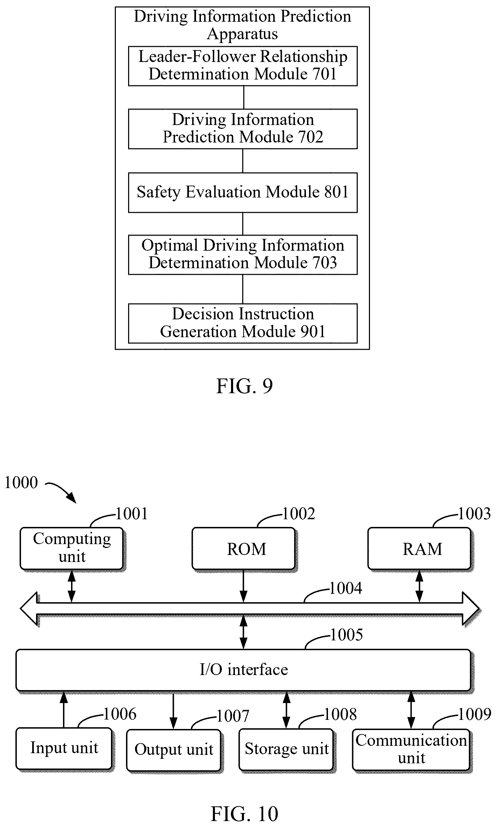

As shown in Fig. 9, the apparatus further includes a decision instruction generation module 901. The decision instruction generation module is configured to generate a decision instruction based on the first optimal driving information and the evaluation result corresponding to the first optimal driving information, where the decision instruction is used to control the target vehicle to perform yielding or overtaking.

For the specific functions and example descriptions of each module and submodule of the apparatus in embodiments of the present disclosure, reference may be made to the relevant descriptions of the corresponding steps in the above-mentioned method embodiments, and details will not be repeated here.

In the technical solutions of the present disclosure, the acquisition, storage, and application of user personal information involved comply with the provisions of relevant laws and regulations and do not violate public order and good customs.

Embodiments of the present disclosure also provide an electronic device, a readable storage medium, and a computer program product.

Fig. 10 is a block diagram of an electronic device 1000 which may be used for implementing embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as personal digital processing, cellular telephones, smart phones, wearable devices, and other similar computing devices. The components shown herein, their connections and relationships, and their functions are by way of example only and are not intended to limit the implementation of the present disclosure as described and/or claimed herein.

As shown in Fig. 10, the electronic device 1000 includes a computing unit 1001, which may execute various appropriate actions and processes in accordance with a program stored in a read-only memory (ROM) 1002 or a program loaded into a random access memory (RAM) 1003 from a storage portion 1008. The RAM 1003 also stores various programs and data required by operations of the system 1000. The computing unit 1001, the ROM 1002 and the RAM 1003 are connected to each other through a bus 1004. An input/output (I/O) interface 1005 is also connected to the bus 1004.

A plurality of components of the device 1000 are connected to the I/O interface 1005: an input unit 1006, such as a keyboard, a mouse etc.; an output unit 1007, such as display devices of various types, a speaker etc.; a storage unit 1008, such as a disk, an optical disk, etc.; and a communication unit 1009, such as a network interface card, a modem, a wireless communication transceiver, etc.. The communication unit 1009 allows the device 1000 to exchange information/data with other devices through a computer network such as the Internet and/or various telecommunications networks.

The computing unit 1001 may be various general-purpose and/or dedicated processing components having processing and computing capabilities. Some examples of the computing unit 1001 include, but are not limited to, central processing unit (CPU), graphics processing unit (GPU), various dedicated artificial intelligence (AI) computing chips, various computing units running machine learning model algorithms, digital signal processors (DSP), and any appropriate processors, controllers, microcontrollers, etc. The computing unit 1001 performs the various methods and processes described above. For example, in some embodiments, the method described above may be implemented as a computer software program, which is tangibly included in a machine readable medium, such as the storage unit 1008. In some embodiments, part or all of the computer program may be loaded and/or installed on the device 1000 via the ROM 1002 and/or the communication unit 1009. When the computer program is loaded into the RAM 1003 and executed by the computing unit 1001, one or more steps of the method described above may be performed. Alternatively, in other embodiments, the computing unit 1001 may be configured to perform the method described above by any other appropriate means (for example, by means of firmware).

Another aspect of the present disclosure provides an autonomous driving vehicle, comprising the electronic device described above.

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, specific-purpose computer or other programmable data processing apparatus, so that the program codes, when executed by the processor or controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more specific example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The Server could be a cloud server, also known as cloud computing server or cloud host, which is a host product in the cloud computing service system to solve the defects of difficult management and weak business scalability in the traditional physical host and Virtual Private server (VPS, Virtual Private Server) service. The server may also be classified as distributed system servers, or a server that combines a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above specific implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the principles of the present disclosure are intended to be included within the scope of the present disclosure.

**Claims**

1.   A driving information prediction method, **characterized by** comprising:

determining (S110) a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period;

obtaining (S120) first predicted driving information based on the first leader-follower relationship, wherein the first predicted driving information comprises: first predicted motion parameters of the target vehicle at a plurality of prediction moments within the first time period, and second predicted motion parameters of the first obstacle at the plurality of prediction moments within the first time period; and

determining (S130) first optimal driving information based on an evaluation result corresponding to the first predicted driving information, wherein the first optimal driving information comprises: optimal predicted motion parameters of the target vehicle at the plurality of prediction moments within the first time period, and optimal predicted motion parameters of the first obstacle at the plurality of prediction moments within the first time period.

2. The method of claim 1, wherein the determining of the first optimal driving information based on the evaluation result corresponding to the first predicted driving information comprises one of:

in response to the evaluation result corresponding to the first predicted driving information satisfying a first condition, using the first predicted driving information as the first optimal driving information; and

in response to the evaluation result corresponding to the first predicted driving information not satisfying the first condition, alternating the first leader-follower relationship to obtain a second leader-follower relationship between the target vehicle and the first obstacle, obtaining second predicted driving information based on the second leader-follower relationship, and determining the first optimal driving information from the first predicted driving information and the second predicted driving information based on an evaluation result corresponding to the second predicted driving information and the evaluation result corresponding to the first predicted driving information;

wherein the first condition comprises at least one of: a first safety evaluation value in the evaluation result corresponding to the first predicted driving information is higher than a safety threshold, or a first somatosensory evaluation value in the evaluation result corresponding to the first predicted driving information is higher than a somatosensory evaluation threshold.

3. The method of claim 1, wherein the determining of the first optimal driving information based on the evaluation result corresponding to the first predicted driving information comprises:

alternating the first leader-follower relationship to obtain a second leader-follower relationship between the target vehicle and the first obstacle;

obtaining second predicted driving information based on the second leader-follower relationship; and

determining, from the first predicted driving information and the second predicted driving information, the first optimal driving information based on an evaluation result corresponding to the second predicted driving information and the evaluation result corresponding to the first predicted driving information.

4. The method of any one of claims 2 to 3, wherein the second predicted driving information comprises: third predicted motion parameters of the target vehicle at the plurality of prediction moments within the first time period, and fourth predicted motion parameters of the first obstacle at the plurality of prediction moments within the first time period.

5. The method of any one of claims 2 to 3, further comprising at least one of:

calculating to obtain a first safety evaluation value in the evaluation result corresponding to the first predicted driving information based on a safety evaluation formula, the first leader-follower relationship and the first predicted driving information;

calculating to obtain a first somatosensory evaluation value in the evaluation result corresponding to the first predicted driving information based on a somatosensory evaluation formula, the first leader-follower relationship and the first predicted driving information;

calculating to obtain a second safety evaluation value in the evaluation result corresponding to the second predicted driving information based on the safety evaluation formula, the second leader-follower relationship and the second predicted driving information; or

calculating to obtain a second somatosensory evaluation value in the evaluation result corresponding to the second predicted driving information based on the somatosensory evaluation formula, the second leader-follower relationship, and the second predicted driving information.

6. The method of any one of claim 2 to 3, wherein the determining of, from the first predicted driving information and the second predicted driving information, the first optimal driving information based on the evaluation result corresponding to the second predicted driving information and the evaluation result corresponding to the first predicted driving information comprises:

determining a first reference value corresponding to the first predicted driving information based on the evaluation result corresponding to the first predicted driving information;
determining a second reference value corresponding to the second predicted driving information based on the evaluation result corresponding to the second predicted driving information; and
selecting, from the first predicted driving information and the second predicted driving information, the first optimal driving information based on a maximum value in the first reference value and the second reference value.

7. The method of claim 1, wherein the obtaining of the first predicted driving information based on the first leader-follower relationship comprises:

performing forward simulation based on the first leader-follower relationship, the motion parameter of the target vehicle at the current moment, and the motion parameter of the first obstacle at the current moment, to obtain the first predicted motion parameters of the target vehicle at the plurality of prediction moments within the first time period and the second predicted motion parameters of the first obstacle at the plurality of prediction moments within the first time period; and
using the first predicted motion parameters of the target vehicle at the plurality of prediction moments within the first time period and the second predicted motion parameters of the first obstacle at the plurality of prediction moments within the first time period as the first predicted driving information.

8. The method of any one of claim 2 to 3, wherein the obtaining of the second predicted driving information based on the second leader-follower relationship comprises:

performing forward simulation based on the second leader-follower relationship, the motion parameter of the target vehicle at the current moment, and the motion parameter of the first obstacle at the current moment, to obtain third predicted motion parameters of the target vehicle at the plurality of prediction moments within the first time period and fourth predicted motion parameters of the first obstacle at the plurality of prediction moments within the first time period; and
using the third predicted motion parameters of the target vehicle at the plurality of prediction moments within the first time period and the fourth predicted motion parameters of the first obstacle at the plurality of prediction moments within the first time period as the second predicted driving information.

9. The method of claim 1, wherein the determining of the first leader-follower relationship between the target vehicle and the first obstacle based on the motion parameter of the target vehicle at the current moment, the path information of the target vehicle within a first time period, the motion parameter of the first obstacle at the current moment, and the predicted path information of the first obstacle within the first time period comprises:

determining right-of-way priorities of the target vehicle and the first obstacle within the first time period based on the motion parameter of the target vehicle at the current moment, the path information of the target vehicle within the first time period, the motion parameter of the first obstacle at the current moment, and the predicted path information of the first obstacle within the first time period; and
determining the first leader-follower relationship between the target vehicle and the first obstacle based on the right-of-way priorities of the target vehicle and the first obstacle within the first time period.

10. The method of claim 9, wherein the determining of the right-of-way priorities of the target vehicle and the first obstacle within the first time period based on the motion parameter of the target vehicle at the current moment, the path information of the target vehicle within the first time period, the motion parameter of the first obstacle at the current moment, and the predicted path information of the first obstacle within the first time period comprises:

obtaining a driving type of the target vehicle within the first time period based on the motion parameter of the target vehicle at the current moment and the path information of the target vehicle within the first time period;
obtaining a driving type of the first obstacle within the first time period based on the motion parameter of the first obstacle at the current moment and the predicted path information of the first obstacle within the first time period; and

obtaining the right-of-way priorities of the target vehicle and the first obstacle within the first time period based on the driving type of the target vehicle within the first time period and the driving type of the first obstacle within the first time period.

11. The method of claim 9, wherein the determining of the first leader-follower relationship between the target vehicle and the first obstacle based on the right-of-way priorities of the target vehicle and the first obstacle within the first time period comprises:

determining a predicted intersection area based on initial predicted motion parameters of the target vehicle at the plurality of prediction moments within the first time period and initial predicted motion parameters of the first obstacle at the plurality of prediction moments within the first time period; and
determining the first leader-follower relationship between the target vehicle and the first obstacle based on the right-of-way priorities of the target vehicle and the first obstacle within the first time period, the predicted intersection area and reference information, wherein the reference information comprises at least one of: a driving type of the target vehicle, a driving type of the first obstacle, the motion parameter of the target vehicle at the current moment, the motion parameter of the first obstacle at the current moment, the initial predicted motion parameters of the target vehicle at the plurality of prediction moments within the first time period, or the initial predicted motion parameters of the first obstacle at the plurality of prediction moments within the first time period.

12. The method of claim 1, after the determining of the first optimal driving information based on the evaluation result corresponding to the first predicted driving information, further comprising:
generating a decision instruction based on the first optimal driving information and the evaluation result corresponding to the first optimal driving information, wherein the decision instruction is used to control the target vehicle to perform yielding or overtaking.

13. A driving information prediction apparatus, **characterized by** comprising:

a leader-follower relationship determination module (701), configured to determine a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period;
a driving information prediction module (702), configured to obtain first predicted driving information based on the first leader-follower relationship, wherein the first predicted driving information comprises: first predicted motion parameters of the target vehicle at a plurality of prediction moments within the first time period, and second predicted motion parameters of the first obstacle at the plurality of prediction moments within the first time period;
an optimal driving information determination module (703), configured to determine first optimal driving information based on an evaluation result corresponding to the first predicted driving information, wherein the first optimal driving information comprises: optimal predicted motion parameters of the target vehicle at the plurality of prediction moments within the first time period, and optimal predicted motion parameters of the first obstacle at the plurality of prediction moments within the first time period.

14. A non-transitory computer-readable storage medium storing computer instructions, wherein the computer instructions are used to cause a computer to perform the method according to any one of claims 1 to 12.

15. A computer program product, comprising a computer program, which, when executed by a processor, implements the method according to any one of claims 1 to 12.

Determine a first leader-follower relationship between a target vehicle and a first obstacle based on a motion parameter of the target vehicle at a current moment, path information of the target vehicle within a first time period, a motion parameter of the first obstacle at the current moment, and predicted path information of the first obstacle within the first time period — S110

Obtain first predicted driving information based on the first leader-follower relationship, where the first predicted driving information includes: first predicted motion parameters of the target vehicle at a plurality of prediction moments within the first time period, and second predicted motion parameters of the first obstacle at the plurality of prediction moments within the first time period — S120

Determine first optimal driving information based on an evaluation result corresponding to the first predicted driving information, where the first optimal driving information includes: optimal predicted motion parameters of the target vehicle at the plurality of prediction moments within the first time period, and optimal predicted motion parameters of the first obstacle at the plurality of prediction moments within the first time period — S130

FIG. 1

202   210   201   211   203

Pre-planning System

Position and motion trend information of the target vehicle

High-definition data and positioning information

Position and motion trend information of the first obstacle

Perception and prediction information

Traffic Flow Strategy — 204

Right-of-way priorities — 205

FIG. 2

FIG. 3

FIG. 4

Interaction Environment Analysis and
Upstream Signal Extraction

High-Definition Data and Positioning Information 511

Perception and Prediction Information 514

Pre-Planning System Information 512

Driving type 513 of the target vehicle within the first time period

Driving type 515 of the first obstacle within the first time period

S510

Right-of-Way Information Integration and Establishment of Leader-follower Relationship

Driving type 513 of the target vehicle within the first time period and Driving type 515 of the first obstacle within the first time period

Traffic Flow Strategy 521

Right-of-Way Priorities 522

S520

Yielding-Overtaking Interaction Simulation and Second-Round Gaming Deduction

Right-of-Way Priorities 522

Establishment of Leader-follower Relationship 531

Forward Simulation 532

Evaluation and second-round gaming 533

S530

Evaluation Result Output and Decision Instruction Issuance

First Optimal Driving Information and Corresponding Evaluation Result 541

Path-Planning Result and Velocity-Planning Result 542

Intervention Information Input 543

S540

FIG. 5

601

602

Vehicle A

Vehicle B

Vehicle A

Vehicle B

603

604

Vehicle A

Vehicle B

Vehicle A

Vehicle B

FIG. 6

Driving Information Prediction
Apparatus

Leader-Follower Relationship
Determination Module 701

Driving Information Prediction
Module 702

Optimal Driving Information
Determination Module 703

FIG. 7

Driving Information Prediction
Apparatus

Leader-Follower Relationship
Determination Module 701

Driving Information Prediction
Module 702

Safety Evaluation Module 801

Optimal Driving Information
Determination Module 703

FIG. 8

Driving Information Prediction
Apparatus

Leader-Follower Relationship
Determination Module 701

Driving Information
Prediction Module 702

Safety Evaluation Module 801

Optimal Driving Information
Determination Module 703

Decision Instruction
Generation Module 901

FIG. 9

1000

Computing unit ⟋1001

ROM ⟋1002

RAM ⟋1003

⟋1004

⟋1005

I/O interface

Input unit ⟋1006

Output unit ⟋1007

Storage unit ⟋1008

Communication unit ⟋1009

FIG. 10

Europäisches Patentamt
European Patent Office
Office européen des brevets

**EUROPEAN SEARCH REPORT**

**Application Number**

EP 25 22 1056

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/161271 A1 (OKUMURA BUNYO [US]) 9 June 2016 (2016-06-09) | 1-4,7, 9-15 | INV. B60W30/09 |
| A | * paragraphs [0023] - [0028]; figures 3A-3C * | 5,6,8 | B60W60/00 B60W30/095 B60W30/18 |
| X | US 2014/327532 A1 (PARK MAN BOK [KR]) 6 November 2014 (2014-11-06) | 1-4,7, 9-15 | B60W50/00 |
| A | * paragraphs [0035] - [0043]; figures 1, 2, 3A-3C * | 5,6,8 | |
| X | US 2019/111930 A1 (KATSURA YOICHIRO [JP] ET AL) 18 April 2019 (2019-04-18) | 1-4,7, 13-15 | |
| A | * paragraphs [0030] - [0060]; figures 1-6 * | 5,6,8 | |

**TECHNICAL FIELDS SEARCHED (IPC)**

B60W

The present search report has been drawn up for all claims

| Place of search | Date of completion of the search | Examiner |
|---|---|---|
| Munich | 15 June 2026 | Granier, Frédéric |

EPO FORM 1503 03.82 (P04C01)

**EP 4 782 292 A1**

## ANNEX TO THE EUROPEAN SEARCH REPORT
## ON EUROPEAN PATENT APPLICATION NO.

EP 25 22 1056

15-06-2026

| Patent document cited in search report | | Publication date | Patent family member(s) | | Publication date |
|---|---|---|---|---|---|
| US 2016161271 | A1 | 09-06-2016 | EP | 3230816 A1 | 18-10-2017 |
| | | | JP | 6595596 B2 | 23-10-2019 |
| | | | JP | 2018500661 A | 11-01-2018 |
| | | | US | 2016161271 A1 | 09-06-2016 |
| | | | WO | 2016094088 A1 | 16-06-2016 |
| US 2014327532 | A1 | 06-11-2014 | CN | 104134370 A | 05-11-2014 |
| | | | DE | 102014006486 A1 | 06-11-2014 |
| | | | KR | 20140131226 A | 12-11-2014 |
| | | | US | 2014327532 A1 | 06-11-2014 |
| US 2019111930 | A1 | 18-04-2019 | CN | 109677408 A | 26-04-2019 |
| | | | JP | 2019075008 A | 16-05-2019 |
| | | | US | 2019111930 A1 | 18-04-2019 |

EPO FORM P0459